(19) Europäisches Patentamt
European Patent Office
Office européen des brevets

(11) **EP 4 697 181 A1**

(12) **EUROPEAN PATENT APPLICATION**
published in accordance with Art. 153(4) EPC

(43) Date of publication:
**18.02.2026 Bulletin 2026/08**

(21) Application number: **25715153.0**

(22) Date of filing: **01.04.2025**

(51) International Patent Classification (IPC):
***G06F 12/00*** *(2006.01)*

(86) International application number:
**PCT/KR2025/004249**

(87) International publication number:
**WO 2026/010078 (08.01.2026 Gazette 2026/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **05.07.2024 KR 20240089292**
**02.08.2024 KR 20240102968**

(71) Applicant: **SAMSUNG ELECTRONICS CO., LTD.**
**Yeongtong-gu**
**Suwon-si, Gyeonggi-do 16677 (KR)**

(72) Inventors:
- **CHAE, Youngmin**
  **Suwon-si, Gyeonggi-do 16677 (KR)**
- **HONG, Gyeonghwan**
  **Suwon-si, Gyeonggi-do 16677 (KR)**
- **KIM, Chulmin**
  **Suwon-si, Gyeonggi-do 16677 (KR)**
- **HWANG, Jongwon**
  **Suwon-si, Gyeonggi-do 16677 (KR)**

(74) Representative: **Walaski, Jan Filip et al**
**Venner Shipley LLP**
**200 Aldersgate**
**London EC1A 4HD (GB)**

(54) **ELECTRONIC DEVICE, METHOD, AND NON-TRANSITORY COMPUTER-READABLE STORAGE MEDIUM FOR MANAGING AVAILABLE SPACE OF VOLATILE MEMORY**

(57) An electronic device identifies an event to load a trained model into volatile memory while executing a software application. The electronic device identifies a command, indicating a size of the trained model to be loaded into the volatile memory, based on the event. The command is generated by the software application. The electronic device identifies an execution state of a processor based on the size of the trained model indicated by the command being larger than a size of an available space within the volatile memory. The electronic device obtains an additional available space within the volatile memory for loading the trained model using a single thread based on an execution state of the processor in a first execution state. The electronic device obtains an additional available space using a multi-thread based on an execution state of the processor in a second execution state.

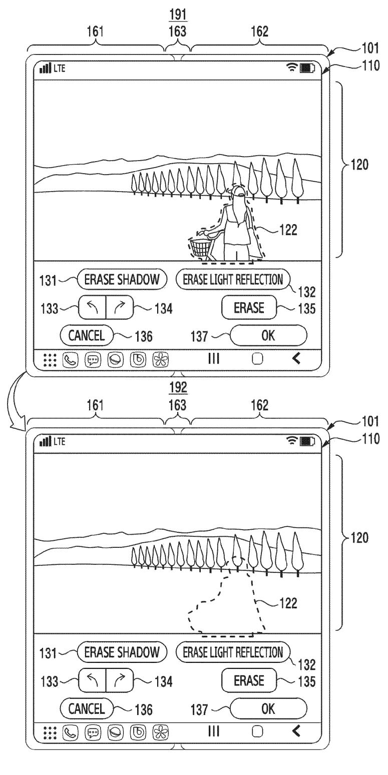


FIG. 1

EP 4 697 181 A1

## Description

### [Technical Field]

The present disclosure relates to an electronic device, a method, and a non-transitory computer readable storage medium to manage available space in volatile memory.

### [Background Art]

Information for driving an electronic device may be stored in memory of the electronic device. As technology advances, the type and/or complexity of functions executed by electronic devices is increasing. The size of information stored in electronic devices is increasing to execute various functions.

The above-described information may be provided as related art for the purpose of helping to understand the present disclosure. No claim or determination is raised as to whether any of the above-described information may be applied as prior art related to the present disclosure.

### [Disclosure]

### [Technical Solution]

According to an embodiment, an electronic device may comprise non-volatile memory comprising one or more storage media and storing instructions, volatile memory, and a processor comprising processing circuitry. The instructions, when executed by the processor, may cause the electronic device to identify an event to load a trained model into the volatile memory while executing a software application. The instructions, when executed by the processor, may cause the electronic device to, based on the event, identify a command indicating a size of the trained model to be loaded into the volatile memory. The command may be generated by the software application. The instructions, when executed by the processor, may cause the electronic device to, based on the size of the trained model indicated by the command being larger than a size of an available space within the volatile memory, identify an execution state of the processor. The instructions, when executed by the processor, may cause the electronic device to, based on an execution state of the processor in a first execution state, obtain an additional available space within the volatile memory for loading the trained model using a single thread. The instructions, when executed by the processor, may cause the electronic device to, based on an execution state of the processor in a second execution state, obtain the additional available space using a multi-thread.

In an embodiment, a non-transitory computer readable storage medium storing instructions may be provided. The instructions, when executed by an electronic device including volatile memory, may cause the electronic device to identify an event to load a trained model into the volatile memory using a software application to be loaded into the volatile memory. The instructions, when executed by the electronic device, may cause the electronic device to, based on the event, identify a command indicating a size of the trained model to be loaded into the volatile memory. The command may be generated by the software application. The instructions, when executed by the electronic device including the volatile memory, may cause the electronic device to, based on the size of the trained model indicated by the command being larger than a size of an available space within the volatile memory, identify an execution state of the processor. The instructions, when executed by the electronic device including the volatile memory, may cause the electronic device to, based on an execution state of the processor in a first execution state, obtain an additional available space within the volatile memory for loading the trained model according to a single thread. The instructions, when executed by the electronic device including the volatile memory, may cause the electronic device to, based on an execution state of the processor in a second execution state, obtain the additional available space according to a multi-thread.

In an embodiment, a method of an electronic device including a CPU and volatile memory may be provided. The method may comprise identifying an event to load a trained model into the volatile memory using a software application loaded into the volatile memory. The method may comprise, based on the event, identifying a command including a size of the trained model to be loaded into the volatile memory, from the software application. The method may comprise, based on the size of the trained model indicated by the command being larger than a size of an available space within the volatile memory, identifying an execution state of the CPU. The method may comprise, by executing a number of threads wherein the number is determined according to the execution state of the CPU, obtaining an additional available space within the volatile memory for loading the trained model.

According to an embodiment, an electronic device may comprise non-volatile memory storing instructions and including one or more storage media, volatile memory, and a central processing unit (CPU) including processing circuitry. The instructions, when executed by the CPU, may cause the electronic device to identify an event to load a trained model into the volatile memory using a software application loaded into the volatile memory. The instructions, when executed by the CPU, may cause the electronic device to, based on the event, identify a command including a size of the trained model to be loaded into the volatile memory, from the software application. The instructions, when executed by the CPU, may cause the electronic device to, based on the size of the trained model indicated by the command being larger than a size of an available space in the volatile memory, identify an execution state of the CPU. The instructions, when executed by the CPU, may cause the electronic device to, by executing a number of threads wherein the number is determined according to the execution state of the CPU, obtain an additional available space within the volatile memory for loading the trained model.

**[Description of the Drawings]**

FIG. 1 illustrates an exemplary operation of an electronic device.
FIG. 2 illustrates a schematic block diagram of an electronic device.
FIG. 3 illustrates a flowchart of an operation of an electronic device for managing available space in volatile memory.
FIG. 4 illustrates a flowchart of an operation of an electronic device that calculates the size of the available space that may be obtained based on a compression swap, by checking a plurality of processes.
FIG. 5 illustrates a flowchart of operation of an electronic device performing a reclaim function.
FIG. 6 schematically illustrates information stored in volatile memory managed by an electronic device.
FIG. 7 illustrates a graph for describing a change in the available space of volatile memory.
FIG. 8 is a block diagram of an electronic device in a network environment.

**[Mode for Invention]**

Hereinafter, various embodiments will be described with reference to the accompanying drawings.

The various embodiments and terms used herein are not intended to limit the technology described in the present disclosure to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

FIG. 1 illustrates an exemplary operation of an electronic device 101. Referring to FIG. 1, the electronic device 101 including a foldable housing is exemplarily illustrated. The foldable housing (or a housing) may include a first housing part 161, a second housing part 162, and a hinge part 163 configured to rotatably couple the first housing part 161 to the second housing part 162. The electronic device 101 may include a display 110 disposed on the first housing part 161 and the second housing part 162. The display 110 may extend from the first housing part 161 to the second housing part 162 across the hinge part 163. The display 110 may be a flexible display. Various form factors of the electronic device 101 are exemplarily described with reference to FIG. 2 and/or FIG. 8.

The electronic device 101 may execute a function based on artificial intelligence. For example, the electronic device 101 may output a user interface (UI) associated with artificial intelligence. For example, the UI may be visualized on the display 110 of the electronic device 101. For example, the UI may be implemented through a speaker and/or a microphone of the electronic device 101. Artificial intelligence, which is a technology for simulating human neural activity (e.g., reasoning activity, creative activity, cognitive activity), may include a computational model (in the present disclosure, a trained model, an artificial intelligence model, and/or a model) designed to simulate the neural activity, and a program, hardware, or any combination thereof to perform computations indicated by the computational model. The electronic device 101 may be configured to execute calculations indicated by the model alone. A model executable by the electronic device 101 alone may be referred to as an on-device model and/or a standalone model.

Using the on-device model, the electronic device 101 may provide various user experiences associated with artificial intelligence. For example, the electronic device 101 may automatically generate an image and/or a video using the on-device model, or may automatically perform an action of a user to edit the image and/or the video. For example, using the on-device model, the electronic device 101 may recognize a remark of the user, or may provide a user experience such as talking (e.g., a text chat and/or a voice chat) to the user. For example, the electronic device 101 may recommend a software application and/or a task to be executed next by the user, or execute in advance, by predicting an action of the user associated with software applications installed in the electronic device 101 using the on-device model.

Referring to FIG. 1, exemplary states 191 and 192 of the electronic device 101 supporting editing of an image 120 using the on-device model are illustrated. Referring to the state 191, the electronic device 101 may display a UI (or an execution screen or a screen) for editing the image 120 on the display 110. The electronic device 101 may display exemplary UIs of the states 191 and 192 by executing a software application (e.g., a gallery application, and/or a shooting application) designed to edit the image 120.

In the state 191 of FIG. 1, the electronic device 101 may display visual objects 131, 132, and 135 corresponding to executable functions based on the on-device model, together with the image 120 to be edited by the functions. The visual object 131 having the form of a button including text such as "erase shadows" may correspond to a function of removing shadow in the image 120. The visual object 132 having the form of a button including text such as "erase light reflection", may correspond to a function of reducing noise in the image 120 caused by light reflection and/or changing a portion of the image 120 representing the light reflection. The visual object 135 having the form of a button including text such as "erase", may correspond to a function of replacing a portion corresponding to a specific subject in the image 120 with a background covered by the specific subject. In order to perform the functions of the visual objects 131, 132, and 135, the electronic device 101 may execute an on-device model (e.g., an object detection model) that may understand or analyze a thread (or content) of the image 120.

In the state 191 of FIG. 1, the electronic device 101 may execute functions for editing the image 120 several times based on the visual objects 131, 132, and 135. The electronic device 101 may display a visual object 133 (e.g., an execution cancel button) to invalidate sequentially functions executed in an order. The electronic device 101 may display a visual object 134 (e.g., a re-execute button) for re-executing the function that has been invalidated based on an input associated with the visual object 133. The electronic device 101 may display a visual object 137 (e.g., a completion button) for storing the image 120 edited by executing the functions, and a visual object 136 (e.g., a cancel button) for discarding (e.g., not storing, and/or deleting) the edit.

Referring to the exemplary state 191 of FIG. 1, the electronic device 101 may identify a subject corresponding to at least a portion of the image 120 by executing the on-device model. For example, the electronic device 101 may identify a subject (e.g., a bicycle and a person) corresponding to a portion 122 of the image 120. The electronic device 101 may receive an input for selecting the portion 122 and/or the subject corresponding to the portion 122. The input may be received based on a touch gesture (e.g., a tap gesture, a long-touch gesture, and/or a drag gesture drawing a figure surrounding the portion 122) on the portion 122. The electronic device 101 receiving the input may visually emphasize the portion 122 with respect to a remaining portion of the image 120. For example, the electronic device 101 may display a closed curve, for example surrounding the portion 122. For example, the electronic device 101 may change a color and/or a color tone of the portion 122 differently from a color and/or a color tone of the remaining portion.

Referring to FIG. 1, the electronic device 101 receiving a first input for selecting a subject represented through the portion 122 may further receive a second input for selecting the visual object 135. The second input may be received based on a touch gesture (e.g., a tap gesture) and/or a mouse click on the visual object 135. The electronic device 101 may execute a function corresponding to the visual object 135, based on the second input. For example, the electronic device 101 may execute a function of removing the subject represented through the portion 122 from the image 120. For example, the electronic device 101 may change colors of pixels so that the pixels having the colors associated with a subject in the portion 122 represent a scene beyond the subject, estimated by another portion (e.g., a background area representing a background) of the image 120. The electronic device 101 may execute the on-device model (e.g., an image generating artificial intelligence model) trained to change the pixels of the portion 122, in order to execute the function.

The electronic device 101 may perform (in an order) a series of operations that execute information and/or a program associated with the on-device model, in order to execute the on-device model. For example, in the electronic device 101, along a memory layer structure, information associated with the on-device model may be loaded from storage to a register (or cache memory) of processing circuitry to perform computations included in the on-device model.

A storage capacity and speed of a memory component (e.g., non-volatile memory, and/or volatile memory to be exemplified with reference to FIG. 2) configured to store information have an inverse relationship. The on-device model may include a large amount of information representing a large number of computations to simulate complex cognitive activity. Since the storage capacity of the memory component is gradually decreased, when a large amount of information is moved (or replicated) to a memory component at a level close to the processing circuitry in the memory layer structure, a probability that the memory component is saturated (e.g., a state in which there is no available space, and/or the size of the available space is less than the size of the large amount of information) may be increased, in order to execute the on-device model.

In the present disclosure, the saturation of the memory component may be described as a state in which the available space is too small, the size of the available space is less than the size of information to be inputted into the memory component, and/or deleting other information stored in the memory component to input information into the memory component is required.

In the present disclosure, movement of information from a first memory component to a second memory component may include an operation in which information stored in the first memory component is stored in the second memory component. Unless clearly disclosed, the movement of information from the first memory component to the second memory component does not mean that the information stored in the first memory component is removed from the first memory component. Information being removed from the memory component may include not only an operation of immediately removing the information from the memory component, but also an operation of changing a state of a portion of the memory component in which the information is stored, based on release, to a state in which other information may be stored or overwritten.

The electronic device 101 may predict, block, or prevent saturation of the memory component, which occurs when the on-device model is loaded. For example, the electronic device 101 may increase the size (before the load) of the available space of the memory component so that a large amount of information for driving the on-device model is loaded into the memory component without saturation. Since the size of the available space of the memory component increases in advance, the electronic device 101 may load the large amount of information into the memory component without saturation of the memory component. The saturation of the memory component may cause an additional computation and/or an additional operation to increase the size of the available space. The additional computation and/or the additional operation may not only delay the execution of the on-device model, but also may decrease reactivity of the electronic device 101 or may cause another operation of the electronic device 101 to at least temporarily cease.

Since the electronic device 101 loads a large amount of information into the memory component without saturation of the memory component, the large amount of information may be loaded (quickly) without the additional computation and/or the additional operation caused by saturation. The electronic device 101 may perform a function and/or computations associated with the on-device model using the loaded information. The electronic device 101 may execute the function associated with the on-device model without delay and/or interruption to solve the issue of saturation.

Referring to FIG. 1, the state 192 after removing the subject represented through the portion 122 from the image 120 by executing the on-device model is illustrated. Referring to the state 192, the electronic device 101 may display the image 120 represented through the portion 122 as a result of inferring an environment beyond a subject at a time point when the image 120 was shot. The electronic device 101 may perform in-painting with respect to the portion 122 by executing the on-device model. In the portion 122 of the image 120 displayed in the state 192, a background (e.g., tree) beyond a subject may be represented instead of a subject represented in the state 191. Since the electronic device 101 loads the on-device model without saturation of the memory component, time for switching from the state 191 to the state 192 may be decreased.

As described above, the present disclosure may be associated with the electronic device 101 that decreases delay (e.g., delay due to saturation of the memory component) caused when loading a large amount of information, a method performed by the electronic device 101, and/or a non-transitory computer readable storage medium that stores instructions for performing the method. An operation of the electronic device 101 for decreasing the delay is described with reference to FIGS. 3 to 6. An exemplary case of the electronic device 101 that more rapidly performs a function (e.g., execution of the on-device model) based on the large amount of information by decreasing the delay, will be described with reference to FIG. 7.

Hereinafter, an exemplary hardware configuration of the electronic device 101 having the above-described memory layer structure will be described with reference to FIG. 2.

FIG. 2 illustrates a schematic block diagram of an electronic device 101. The electronic device 101 of FIG. 2 may include the electronic device 101 of FIG. 1. Referring to FIG. 2, the electronic device 101 may be one of various types of electronic devices such as a laptop personal computer (PC) 290, smartphones 291 (e.g., a bar-type smartphone 291-1, a foldable-type smartphone 291-2 having a shape of the electronic device 101 of FIG. 1, or a slidable (or rollable) type smartphone 291-3) having various form factors, a tablet PC 292, a head-mounted display (HMD) (or a head-wearable device) device 293, a watch 294, and other similar computing devices (not illustrated).

The electronic device 101 may be referred to as a mobile device, user equipment (UE) (or a user terminal), a multifunctional device, a portable communication device, a portable device, or a server. A form factor of the electronic device 101 is not limited to the exemplary form factors illustrated in FIG. 2. For example, the electronic device 101 may be included as an electronic control unit (ECU) in a vehicle (e.g., an electric vehicle (EV)). For example, the electronic device 101 may include a projector for projecting light to the outside.

Referring to FIG. 2, the electronic device 101 may include a central processing unit 210 and/or memory 220. The electronic device 101 may further include a neural processing unit (NPU), a graphic processing unit (GPU), or a combination thereof. The electronic device 101 may further include a display 110 (e.g., the display 110 of FIG. 1). The CPU 210 may be electrically and/or operatively coupled to the memory 220, the NPU 230, the GPU 240, and/or the display 110. Electrical components being electrically coupled may include a state in which a wired signal path (or a connection for wireless communication) for transmission of a signal is established between the electronic components. Electrical components being operatively coupled may include a state in which the electronic components are directly coupled (or a state in which the electronic components are indirectly coupled) so that another electronic component is controlled by any one electronic component of the electronic components. Referring to FIG. 2, an electrical connection between the CPU 210, the memory 220, the NPU 230, the GPU 240, and the display 110 based on the electronic component, referred to as a communication bus 202, is schematically illustrated. The CPU 210, the memory 220, the NPU 230, the GPU 240, and the display 110 may be communicatively coupled through the communication bus 202.

The CPU 210 of FIG. 2 may include circuitry (e.g., processing circuitry, core circuitry, and/or core) for performing a calculation (e.g., an arithmetic calculation and/or a logical calculation ) on data. A binary code (e.g., an instruction) indicating the calculation may be inputted to the CPU 210. The CPU 210 may have a structure (e.g., a multi-core structure based on a combination of a plurality of core circuits such as a dual core, a quad core, a hexa core, or an octa core) for simultaneously loading (or fetching) and/or executing a plurality of instructions. In the electronic device 101 including at least one processor including the CPU 210, the at least one processor may perform operations of the present disclosure individually or collectively. For example, the at least one processor may perform operations of FIGS. 3 to 5 individually and/or collectively by executing instructions stored in the memory 220.

The memory 220 of FIG. 2 may include a hardware component for storing data and/or an instruction that are inputted to the CPU 210, the NPU 230, and/or the GPU 240 and/or outputted from the CPU 210, the NPU 230, and/or the GPU 240. The memory 220 may include, for example, volatile memory 221 such as Random-Access Memory (RAM) and/or non-volatile memory 222 such as Read-Only Memory (ROM). The volatile memory 221 may include, for example, at least one of Dynamic RAM (DRAM), Static RAM (SRAM), Cache RAM, and Pseudo SRAM (PSRAM). The non-volatile memory 222 may include, for example, at least one of Programmable ROM (PROM), Erasable PROM (EPROM), Electrically Erasable PROM (EEPROM), flash memory, a hard disk, a compact disk, and an Embedded Multi Media Card (eMMC). The non-volatile memory 222 may include one or more storage media positioned in a distributed manner in the electronic device 101. The CPU 210 may perform a function and/or an operation (e.g., the operations of FIGS. 3 to 5) indicated by the instructions, by executing the instructions in the memory 220.

The display 110 of FIG. 2 may include circuitry for visualizing information provided from the CPU 210 and/or the GPU 240. The display 110 may include a liquid crystal display (LCD), a plasma display panel (PDP), and/or light emitting diodes (LEDs). The LED may include an organic LED (OLED). The display 110 may include electronic paper. A display area (or an active area) of the display 110 may include an area where light is emitted, formed by pixels (e.g., activated pixels) of the display 110. The display 110 may include a sensor (e.g., a touch sensor) for detecting an external object (e.g., a finger of a user) on the display 110. The sensor may be included in the display 110 in a form of a panel (e.g., a touch sensor panel (TSP)).

The NPU 230 of FIG. 2 may include a hardware component for supporting one or more functions based on a neural network. The neural network is a recognition model implemented with software or hardware that mimics a computational ability of a biological system using a large number of artificial neurons (or nodes). For example, the electronic device 101 may execute functions (e.g., editing and/or synthesizing functions of image 120, described with reference to FIG. 1) similar to a cognitive function or a learning process of a human based on the neural network. One or more functions based on the neural network supported by the NPU 230 may include a function of training the neural network, a function of performing video recognition, voice recognition, and/or handwriting recognition using the trained neural network, a function of generating text, an image, a video, and/or audio using the trained neural network, a function personalized to a user of the electronic device 101 based on the neural network, and a function of controlling an application-based neural network using an Application Programming Interface (API).

The GPU 240 of FIG. 2 may include one or more pipelines that perform a plurality of operations necessary for executing instructions associated with computer graphics. For example, the pipeline of the GPU 240 may include a graphics pipeline or a rendering pipeline for generating a three-dimensional image and generating a two-dimensional raster image from the generated three-dimensional image. The graphics pipeline may be controlled based on code included in a file stored in the memory 220 and written in a shading language. For example, the code written in the shading language may be compiled by the CPU 210 into instructions executable in the GPU 240.

In the present disclosure, the CPU 210 may be referred to as a first processor, a main processor, a master processor, and the NPU 230 and/or the GPU 240 may be referred to as a second processor, an auxiliary processor (and/or a co-processor), a slave processor, a sub-processor, an accelerator, another processor, and/or a remaining processor.

Each of the CPU 210, the NPU 230, and the GPU 240 of FIG. 2 may be included as different Integrated Circuits in the electronic device 101, or may be included in a single IC based on a System on Chip (SOC) (e.g., a chip referred to as an application processor (AP)). For example, the CPU 210, the NPU 230, the GPU 240, or a combination thereof may be included in the single integrated circuit included in the electronic device 101. Circuitry included in the SoC is not limited to the example, and for example, another hardware component (e.g., a communication processor sensor hub, and/or an image signal processor (ISP)) not illustrated in FIG. 2 may be included in the single integrated circuit together with the CPU 210, the NPU 230, and the GPU 240.

Referring to FIG. 2, a state of the memory 220 managed by the electronic device 101 executing a plurality of processes is schematically illustrated. A process and/or a thread may be a unit in which the CPU 210 executes or schedules instructions (or functions implemented by the instructions). The CPU 210, which identifies a user input for executing a software application, may store instructions (e.g., instructions corresponding to the software application) stored in the non-volatile memory 222 in the volatile memory 221 (e.g., caching and/or paging). The CPU 210 may generate a process for executing the instructions. The CPU 210 may allocate a portion of the volatile memory 221 to the generated process. The portion may be referred to as a resource (or an execution environment) for executing the instructions and/or the software application.

As the CPU 210 operates, different portions of the volatile memory 221 may be respectively allocated to a plurality of processes executed by the CPU 210. Referring to FIG. 2, states of the volatile memory 221 mapped to each of n processes (e.g., a first process 252-1 to an nth process 252-n) are illustrated. An available space (e.g., "as" in FIG.2) of the volatile memory 221 may include at least a portion (e.g., free memory) of the volatile memory 221 that is not occupied by any process. However, it is not limited thereto, and the available space (as) of the volatile memory 221 may include at least a portion of the volatile memory 221 that may be allocated to a process to be additionally executed. The available space (as) of the volatile memory 221 may be referred to as available memory of the volatile memory 221. The available memory may include a portion of the volatile memory 221 referred to as a free memory, and a portion (e.g., file memory) of the volatile memory 221 in which at least a portion of a file (e.g., a file stored in the non-volatile memory 222) is stored.

For example, processing circuitry included in the CPU 210 may directly access information stored in a register included in the CPU 210. The register may be connected to cache memory (e.g., a level 1 (L1) cache, an L2 cache, and/or an L3 cache) of the CPU 210. The cache memory of the CPU 210 may be connected to the volatile memory 221. The volatile memory 221 may be connected to the non-volatile memory 222. The above-described connections of the register, the cache memory, the volatile memory 221, and the non-volatile memory 222 may form a memory layer structure. The register may be positioned closest to the processing circuitry of the CPU 210 in the memory layer structure of the electronic device 101, and the non-volatile memory 222 may be positioned farthest from the processing circuitry of the CPU 210 in the memory layer structure.

Referring to FIG. 2, a large amount of information for execution of an on-device model may include model data 269. The model data 269 may include data indicating computations for the execution of the on-device model. Statistically, the model data 269 may have a size of several hundred megabytes to gigabytes. The model data 269 may be referred to as a model file. The model data 269 may include data indicating computations of an artificial intelligence-based computational model, such as a large language model (LLM) and/or a large vision model (LVM). The model data 269 may be stored in the non-volatile memory 222, and may be loaded from the non-volatile memory 222 to the volatile memory 221 along the memory layer structure, when an event for executing the on-device model occurs.

An operating system (or a system service or a system application) executed based on the CPU 210 may be designed to decrease the probability of cache miss. When information that has not been moved (e.g., cached) from the non-volatile memory 222 to the volatile memory 221 is called, a cache miss may occur. Since a cache miss requires movement of information from the non-volatile memory 222 to the volatile memory 221, a delay due to the movement may be generated. Decreasing the probability of a cache miss occurring may be required to decrease the delay. The operating system may be designed so that CPU 210 actively stores information in the volatile memory 221 to decrease the probability of a cache miss. In this case, the probability that the size of the available space (as) is smaller than the size of the model data 269 may increase.

For example, in the case that an event for executing the on-device model occurs at a time point when the available space (as) of the volatile memory 221 is smaller than the size of the model data 269, increasing the size of the available space (as) may be required to move the model data 269 to the volatile memory 221. The CPU 210 may increase the size of the available space (as) before movement of the model data 269 starts. For example, the CPU 210 may support or provide an application programming interface (API) and/or a command to identify the size of the model data 269 from a software application (e.g., any one process of the n processes) executed by the CPU 210 to execute the model data 269. The CPU 210 may determine whether to increase the size of the available space (as) for caching of the model data 269 by comparing the size of the model data 269 with the size of the available space (as).

For example, computations included in the on-device model may be defined or designed to be executed using the NPU 230 and/or the GPU 240. When moving (e.g., copying) a large amount of information (e.g., the model data 269) to be processed by the NPU 230 and/or the GPU 240, from the non-volatile memory 222 to the volatile memory 221, the CPU 210 may perform an operation to increase the size of the available space (as) to be larger than or equal to the size of the large amount of information. Since the size of the available space (as) increases to be larger than or equal to the size of the large amount of information, the large amount of information may be stored in the volatile memory 221 without saturation of the volatile memory 221. Since the volatile memory 221 is not saturated, while the large amount of information is loaded into the volatile memory 221, an additional operation and/or delay for resolving the saturation of the volatile memory 221 may not occur. For example, the speed at which the large amount of information is loaded into the volatile memory 221 may be increased. For example, the large amount of information may be processed more rapidly by the NPU 230 and/or the GPU 240 without additional delay.

The CPU 210 may perform an operation for loading the model data 269 without saturation of the volatile memory 221 by executing a memory management process 251. The API and/or the command notifying the size of the model data 269 may be processed by the CPU 210 that executes the memory management process 251. An operation in which the CPU 210 processes the API and/or the command, by executing the memory management process 251, will be described with reference to FIG. 3. The CPU 210 may perform a reclaim function to increase the size of the available space (as) of the volatile memory 221.

The reclaim function of the CPU 210 may include an operation of deallocating (or freeing) a portion of the volatile memory 221 in which information (e.g., a file) existing in the non-volatile memory 222 is stored. The reclaim function may include an operation of reducing the size of a portion of the volatile memory 221 allocated to a process based on compression. The compression may include an operation (e.g., a compression swap) of compressing and moving (e.g., a swap partition in the volatile memory 221, referred to as zRAM) information in the volatile memory 221 that is not stored in the non-volatile memory 222. The compression may include an operation (e.g., a storage swap) of moving information in the volatile memory 221 to a virtual memory space 261 of the non-volatile memory 222. The reclaim function may include an operation of adding a portion of the volatile memory 221 allocated to the process to the available space (as) by terminating the process. Termination of at least one of the n processes (e.g., the first process 252-1 to the nth process (252-n)) by the CPU 210 may be conditionally performed according to a state of each of the processes.

For example, the processes executed by the CPU 210 may be distinguished into a first type of process that is allowed to be terminated by the memory management process 251 and a second type of process that is not allowed to be terminated by the memory management process 251. Referring to a name (kill) of a command terminating the process 251, the first type of process may be referred to as a killable process, and the second type of process may be referred to as an unkillable process. The CPU 210 may terminate the first type of process in order to increase the size of the available space (as). After the first type of process is terminated, the CPU 210 may change or set a portion of the volatile memory 221 allocated to the terminated process to become available space (as). For example, the portion of the volatile memory 221 allocated to the terminated process may be used to store the model data 269. The CPU 210 may perform a compression swap for a portion of the volatile memory 221 allocated to the second type of process to increase the size of the available space (as). Information used by the second type of process may be compressed without termination of the second type of process by the compression swap. An exemplary operation in which the CPU 210 increases the size of the available space (as) based on process types will be described with reference to FIG. 4.

The CPU 210 may adjust the number of threads for executing the reclaim function according to an execution state of the CPU 210. For example, the number of threads may be determined to prevent the CPU 210 from temporarily ceasing another operation to perform the reclaim function. An exemplary operation in which the CPU 210 adjusts the number of threads will be described with reference to FIG. 5. An exemplary reclaim function (e.g., the compression swap) performed based on the thread will be described with reference to FIG. 6.

As described above, the CPU 210 may identify an event to load a trained model into the volatile memory 221 while executing the software application. The CPU 210 may identify a command indicating a size (e.g., the size of the model data 269) of the trained model to be loaded into the volatile memory 221 based on the event. In the case that the size in the command is larger than the size of the available space (as) in the volatile memory 221, the CPU 210 may execute the reclaim function with respect to the volatile memory 221 to increase the size of the available space (as) of the volatile memory 221. The CPU 210 may measure or identify a size increment of the available space (as) to be obtained based on execution of the reclaim function by calculating the difference between the size of the trained model and the size of the available space (as). The size increase may be used to determine the process among the processes executed to at least partially occupy the volatile memory 221 to cease and/or to perform a compression swap with respect to a portion of the volatile memory 221 allocated to a process among the processes. The CPU 210 may rapidly load the trained model without saturation of the volatile memory 221 by executing the reclaim function.

Hereinafter, an exemplary operation of the CPU 210 executing the reclaim function will be described with reference to FIG. 3.

FIG. 3 illustrates a flowchart of an operation of an electronic device for managing an available space (e.g., the available space (as) of FIG. 2) of volatile memory (e.g., the volatile memory 221 of FIG. 2). The electronic device 101 of FIGS. 1 to 2 and/or the CPU 210 of FIG. 2 may be configured to perform operations of FIG. 3. An order in which the operations of FIG. 3 are performed by the electronic device is not limited to an order illustrated in FIG. 3. For example, the electronic device may perform the operations of FIG. 3 differently from the order illustrated in FIG. 3. For example, the electronic device may perform at least two of the operations of FIG. 3 substantially simultaneously. At least one of the operations of FIG. 3 may be performed by a CPU executing the memory management process 251 of FIG. 2.

Referring to FIG. 3, in an operation 310, the electronic device may identify an event to load information to be processed by a second processor different from a first processor. The first processor of the operation 310 may include the CPU 210 of FIG. 2. The second processor of an operation 320 may include the NPU 230 and/or the GPU 240 of FIG. 2.

The event of the operation 310 may occur to execute an on-device model to be performed by an NPU. For example, while executing a software application configured to execute the on-device model, the electronic device may identify the event occurring by the software application. The software application may include a software application for editing the image 120 of FIG. 1. For example, the event may occur by a user input for editing the image 120.

For example, the electronic device may identify the event of the operation 310 based on a software application (e.g., an automatic speech recognition (ASR) service and/or a voice recognition agent) for voice recognition and processing. For example, the electronic device may identify the event based on a condition (e.g., identifying a preset word such as "Hey Bixby" from an audio signal) for analyzing the audio signal.

For example, the electronic device may identify the event based on receiving text indicating a natural language sentence from a user, through a UI (e.g., the UI to receive a prompt) to control the on-device model. For example, the event of the operation 310 may occur in a preset time range (e.g., a time range in which the user conventionally sleeps) to obtain (e.g., a user recognition, and/or a category) additional information from an image and/or a video stored in the electronic device.

The electronic device may load (e.g., cache) the information (e.g., the model data 269 of FIG. 2, indicating a trained model) of the operation 310 to handle or process the event. The loading the information of the operation 310 by the first processor in response to the event may be performed at a second time point after a first time point in which the event is identified. The electronic device may perform or complete operations 320, 330, 340, and 350 of FIG. 3 before the second time point (e.g., a time point when an operation 360 of FIG. 3 is performed) at which the information of the operation 310 is loaded. Statistically (or empirically), a time interval of several milliseconds to several seconds exists between the first time point and the second time point. The electronic device may perform an operation (e.g., the operations 320, 330, 340, and 350 of FIG. 3) to load the information of the operation 310 without saturation of the volatile memory in the time interval.

Referring to FIG. 3, in the operation 320, the electronic device may identify a command indicating the size of the information to be loaded. As described later with reference to Table 1, the command of the operation 320 may be defined to require a model name defined by a software application and/or a size of information (e.g., a numeric value represented in bytes) that defines a model corresponding to the model name as parameters. The command of the operation 320 may be called or generated by the software application generating the event of the operation 310. The command of the operation 320 may indicate the size of the information (e.g., the on-device model and/or the trained model) of the operation 310 to be loaded into the volatile memory. In terms of the software application, the operation 320 may be referred to as an operation notifying the size of information to be loaded into the volatile memory to an operating system (or a framework). The electronic device identifying the command of the operation 320 may perform the operation 330.

Referring to FIG. 3, in the operation 330, the electronic device may identify or determine whether the size of the information is larger than the size of the available space of the volatile memory. The electronic device may compare the size indicated by the command of the operation 320 with the size of the available space (e.g., the available space (as) of the volatile memory 221 of FIG. 2) of the volatile memory. The size of the available space of the volatile memory in the operation 330 may be periodically checked or monitored based on execution of the memory management process 251 of FIG. 2 and/or another memory management program. For example, the size of the available space of the volatile memory of the operation 330 may be measured in response to identifying the command of the operation 320. For example, the size of the available space of the memory of the operation 330 may correspond to a size identified (or last updated) before identifying the command of the operation 320.

Referring to FIG. 3, in the case that the size of the information included in the command of the operation 320 is larger than the size of the available space of the volatile memory (330-YES), the electronic device may perform the operation 340. In the case that the size of the information included in the command of the operation 320 is larger than the size of the available space of the volatile memory, while loading the information of the operation 310 into the volatile memory, the volatile memory may be saturated, and a reclaim function may be executed. The electronic device may perform an operation (e.g., the operations 340 and 350 of FIG. 3) to prevent or reduce use of the reclaim function by predicting the saturation. In the case that the size of the information indicated by the command of the operation 320 is smaller than or equal to the size of the available space of the volatile memory (330-NO), the electronic device may bypass the operations 340 and 350 and perform the operation 360.

Referring to FIG. 3, in the operation 340, the electronic device may generate a list of one or more processes. The list of the operation 340 may include processes in which the reclaim function (e.g., a compression swap) will be executed. For example, the first processor of the electronic device may determine or filter a target of the reclaim function to obtain the available space of the volatile memory in which the information of the operation 310 will be stored, among processes executed by the first processor.

For example, the electronic device may identify or generate the list of the operation 340 to expand the available space list by the difference between the size of the information of the operation 320 and the size of the available space of the volatile memory. The electronic device may calculate or identify the difference by subtracting the size of the available space of the volatile memory from the size of the information indicated by the command of the operation 320. The electronic device may generate a list of processes capable of performing the compression swap to increase the size of the available space by the difference. For example, the electronic device may generate the list of the operation 340 to obtain a portion of the volatile memory having the size by the difference based on the compression swap. An operation of generating the list of the operation 340 will be described in detail with reference to FIG. 4.

Referring to FIG. 3, in the operation 350, the electronic device may change (e.g., release and/or compress) portions of the volatile memory allocated to one or more processes based on an execution state of the CPU. The electronic device may identify the execution state of the CPU based on the size in the command of the operation 320, which is larger than the size of the available space in the volatile memory. The execution state may be identified based on pressure stall information (PSI). The PSI may include information indicating a workload of a CPU, memory, and/or input/output (I/O) hardware. The PSI may include information indicating a delay in scheduling of the CPU. The PSI may include time-based information (e.g., a usage rate of the CPU) of the CPU that is activated to execute a thread and/or a process.

The electronic device may generate one or more threads for changing the portions of the volatile memory in the operation 350, based on the PSI. The number of threads may be associated with a state of the CPU indicated by the PSI. For example, the electronic device may determine the execution state of the CPU as one of preset execution states using PSI. The preset execution state may be distinguished by the usage rate of the CPU indicated by the PSI. As the usage rate of the CPU is high, the preset execution states may be defined so that the processor executes a smaller number of threads to perform the operation 350. An exemplary operation of the electronic device that performs the operation 350 by generating and/or executing one or more threads will be described with reference to FIG. 5.

The electronic device may at least partially change a portion of the volatile memory allocated to the processes into available space by performing the operation 350. For example, the electronic device may compress information stored in the portion of the volatile memory reserved for a specific process by performing a compression swap. The electronic device may move the compressed information to a portion (e.g., the swap partition described above with reference to FIG. 2) of the volatile memory dedicated for the compression swap. The electronic device may change the portion of the volatile memory in which the compressed information is stored into available space based on the movement. A size of the portion of the volatile memory allocated to the specific process may be decreased based on the change. For example, the size of the available space may be increased by the size of the compressed portion based on the change. An operation of the electronic device performing the compression swap will be described with reference to FIG. 6.

For example, the electronic device may move the information stored in the portion of the volatile memory reserved for the specific process from the volatile memory to non-volatile memory (e.g., the virtual memory space 261 of FIG. 2) by performing a storage swap. The electronic device may change the portion of the volatile memory, in which information moved to the non-volatile memory is stored, into available space based on the movement. The size of the portion of the volatile memory reserved for the specific process may be decreased by the size of the information based on the change. For example, the size of the available space may be increased by the size of the information moved to the non-volatile memory based on the change.

For example, the electronic device may release a portion of the volatile memory occupied to cache a file stored in the non-volatile memory. The portion of the volatile memory from which the file was cached may be changed into available space based on the release. The change may cause the size of the available space to be increased by a size of at least a portion of the cached file.

For example, according to a type, a state, and/or a category of processes, the electronic device may select or determine a reclaim function to be applied to each of the processes, among a compression swap, a storage swap, and/or termination (e.g., a kill command). For example, the electronic device may execute a reclaim function based on termination with respect to a process (e.g., a killable process) of a type, a state, and/or a category that are capable of terminating. The termination of the process may be performed based on a kill command defined in a Linux operating system. In the example, the size of the available space of the volatile memory may be increased by the size of a portion of the volatile memory associated with the process. For example, the electronic device may execute a reclaim function based on the compression swap and/or the storage swap with respect to a process (e.g., unkillable processes) of a type, a state, and/or a category that are not allowed to terminate. In the example, the size of the available space of the volatile memory may be increased by a size of information compressed by the compression swap and/or the storage swap.

The size of the available space of the volatile memory may be increased by performing the operation 350. After the size of the available space is increased or while the size of the available space is being increased, the operation 360 of FIG. 3 may be initiated by the electronic device.

Referring to FIG. 3, in the operation 360, the electronic device may load information into the volatile memory. The information of the operation 310 may be stored in an available space in the volatile memory, including an available space of the volatile memory identified by the operation 330, and an additional available space generated in the volatile memory based on the operation 350. Since the electronic device causes the size of the available space of the volatile memory to be larger than or equal to the size of the information of the operation 310, based on the operations 330, 340, and 350, the electronic device may perform the operation 360 without saturation of the volatile memory. While performing the operation 360, the electronic device may store or move information to the volatile memory without additionally executing the reclaim function.

Referring to FIG. 3, in an operation 370, the electronic device may store a history of changing portions of the volatile memory. In the case that the operation 350 is performed based on the compression swap, the electronic device may store compression efficiency (e.g., a ratio between sizes of a portion of the volatile memory before performing compression and a portion of the volatile memory after performing compression) for the portion of the volatile memory allocated to the specific process. The compression efficiency may be used when loading other information into the volatile memory after performing the operations of FIG. 3. The history of the operation 370 may be stored or managed for each process. The electronic device performing the operation 370 by executing the memory management process of FIG. 2 may store the history of the operation 370 in a database of the memory management process.

Data stored based on the operation 370 is not limited to the history of the operation 370. For example, the electronic device may measure the size of the information (e.g., the model data 269 of FIG. 2) actually loaded into the volatile memory based on the operation 360. In the case that the measured size is different from the size indicated by the command of the operation 320, the electronic device may store the measured size in the database. The measured size, stored in the database, may be used to execute a reclaim function based on the event occurring again in the volatile memory, when the event of the operation 310 occurs again, after performing the operation 370. For example, in the case that the command of the operation 320 is identified again, based on the event occurring again, the electronic device may determine whether to execute the reclaim function or may execute the reclaim function, by using the measured size stored in the database.

Referring to FIG. 3, in an operation 380, the electronic device may process the information loaded into the volatile memory using the second processor. For example, the first processor of the operation 310 may control the second processor so that the information loaded based on the operation 360 is processed by the second processor of the operation 310. For example, in the case that information loaded into the volatile memory based on the operation 360 is a trained model for on-device artificial intelligence, the CPU may control the NPU (or the GPU) to execute the trained model stored in the available space of the volatile memory.

An exemplary case of loading the trained model for the on-device artificial intelligence has been described, but is not limited thereto. For example, the electronic device may include an accelerator (or acceleration circuitry) configured to perform a computation associated with a video codec and/or an audio codec. When loading a large amount of information (e.g., a video file, an audio file, and/or a bitstream indicating a video and/or an audio) to be processed by the accelerator, the electronic device may perform an operation to increase the size of the available space of the volatile memory to be more than the size of the large amount of information, similar to the above description with reference to FIGS. 1 to 3.

Table 1 is pseudo code corresponding to an operation of the electronic device described with reference to FIG. 3.

[Table 1]

| Row number | Pseudo code |
|---|---|
| 1 | # Model size database<br>model_size_db = {} |
| 2 | # Model load function<br>def load_model(model_name, model_size): |
| 3 | # Get current time<br>current_execution_time = now() |
| 4 | # After comparing last execution time to speed limit, terminate function in case that time limit has not passed<br>if current_execution_time - last_execution_time < rate_limit: return |
| 5 | # Update last execution time<br>last_execution_time = current_execution_time |
| 6 | # Obtain size of previous model<br>model_size_prev = model_size_db[model_name] |
| 7 | # Set minimum and maximum model size<br>model_size_min = model_size_db * 0.8<br>model_size_max = model_size_db * 1.2 |
| 8 | # In case that previous model size is smaller than minimum, use previous size<br>if model_size_prev < model_size_min:<br>model_size = model_size_prev |
| 9 | # In case that previous model size is larger than maximum, use previous size<br>else if model_size_max < model_size_prev:<br>model_size = model_size_prev |

(continued)

| Row number | Pseudo code |
|---|---|
| 10 | # Call function to load model.<br>return_load_model(model_size) |

"#" of Table 1 indicates that a line starting with the "#" is an annotation. Referring to the Row number column of Table 1, a variable having the name "model_size_db" of a first row may be declared. The history of the operation 370 may be stored or accumulated in the variable. A command and/or an API having the name "load_model" of a second row may correspond to the command of the operation 320. Referring to the second row, the name of the trained model to be loaded into the volatile memory and the size (e.g., the size of the model data 269 of FIG. 2) of the trained model may be inputted into the memory management process together with the command.

The pseudo code of a third row to a tenth row of Table 1 may indicate an operation of the first processor (e.g., the CPU), which will be executed by the command and/or the API of the second row. A pseudo code of the third row to a fifth row may indicate an operation in which the first processor determines whether to execute the command by comparing the last time when the command of the second row is executed with the current time. A pseudo code of a sixth row may indicate an operation of obtaining the size of information (e.g., the information loaded into the volatile memory based on the operation 360) loaded into the volatile memory among the history stored based on the operation 370. A seventh row to a ninth row may indicate an operation of determining a numeric value (e.g., the size of information in the operation 330) to be compared with the size of the available space of the volatile memory by comparing a size obtained from the history and a size included in the command of the second row. A pseudo code of the tenth row may indicate an operation of executing a sub-routine defined for comparison of the operation 330.

Hereinafter, an operation of the first processor, executed by the pseudo code of the tenth row, will be described with reference to FIG. 4.

FIG. 4 illustrates a flowchart of an operation of an electronic device that calculates a size of an available space (e.g., the available space (as) of FIG. 2) that may be obtained based on a compression swap, by checking a plurality of processes (e.g., the first process 252-1 to the nth process 252-n of FIG. 2). The electronic device 101 of FIGS. 1 to 2 and/or the CPU 210 of FIG. 2 may be configured to perform operations of the electronic device of FIG. 4. An operation of FIG. 4 may be associated with the operations 330 and 340 of FIG. 3. For example, the electronic device may perform at least one of the operations of FIG. 4 in response to identifying the command of the operation 320 of FIG. 3.

An order in which the operations of FIG. 4 are performed by the electronic device is not limited to an order illustrated in FIG. 4. For example, the electronic device may perform the operations of FIG. 4 differently from the order illustrated in FIG. 4. For example, the electronic device may perform at least two of the operations of FIG. 4 substantially simultaneously. At least one of the operations of FIG. 4 may be performed by a CPU that executed the memory management process 251 of FIG. 2.

Referring to FIG. 4, in an operation 410, the electronic device may identify the size of the available space of volatile memory required to load information (e.g., the model data 269 of FIG. 2) into the volatile memory (e.g., the volatile memory 221 of FIG. 2). The information of the operation 410 may be the amount of information to be loaded into the volatile memory as the information of the operation 310 of FIG. 3.

For example, a size identified by the operation 410 may correspond to a size included in the command of the operation 320. The size may be the size required to load the information into the volatile memory without saturation of the volatile memory. For example, the size identified by the operation 410 may be a size increment of the available space, which is required to load the information of the operation 410 without saturation.

Referring to FIG. 4, in an operation 420, the electronic device may identify a plurality of processes having a preset state. The electronic device may identify, among a plurality of processes being executed based on a first processor such as a CPU, processes that are set not to be terminated by a reclaim function. The preset state of the operation 420 may include an uninterruptible sleep state (e.g., a D state), among a plurality of states defined for scheduling (e.g., scheduling of a time resource of the CPU occupied to execute a process) and/or management of the process. The plurality of processes having the preset state of the operation 420 may be unkillable processes. The plurality of processes of the operation 420 may include a process that is essential for an operation of an operating system (e.g., a system process) and/or a process that is set to sleep until information is obtained using communication (e.g., communication in the electronic device such as the non-volatile memory 222 of FIG. 2, and/or network communication through communication circuitry).

The electronic device that identifies the plurality of processes of the operation 420 may identify distinct portions of the volatile memory allocated to each of the plurality of processes. For example, the electronic device may identify or obtain a mapping relationship between the plurality of identified processes and portions of the volatile memory. The electronic device may check sizes of the portions. The electronic device may measure or identify a size of information that may be compressed by a compression swap among information stored in the portions.

Referring to FIG. 4, in an operation 430, the electronic device may calculate size increments that may be obtained by compressing each of portions of the volatile memory respectively allocated to the plurality of processes. For example, the electronic device that identifies each of the portions of the volatile memory, corresponding to each of the plurality of processes, may calculate or identify the size increment by which the available space can be increased by compressing a portion.

For example, the electronic device may identify the size of a portion of the volatile memory allocated to a specific process based on a resident set size (RSS). The RSS may be described as a numeric value indicating the size of the portion in a unit of page (e.g., a portion of volatile memory having a size of 4 kilobytes). The electronic device may calculate or determine the size increment that may be obtained by compressing the portion based on Equation 1, based on the RSS of the portion of the volatile memory of the specific process.

【Equation 1】

$$A\ size\ increment = (Anonymous\ RSS - Swap\ RSS) \times correction\ coefficient$$

An Anonymous RSS of Equation 1 may be the size of a portion in which information that is not connected to storage, such as non-volatile memory, is stored in a portion of the volatile memory corresponding to the specific process. For example, in the case that a file stored in the non-volatile memory is stored in the portion of the volatile memory corresponding to the specific process, the Anonymous RSS of Equation 1 may indicate the size of a remaining portion excluding the file. A swap RSS of Equation 1 may indicate the size of information (e.g., information compressed in the volatile memory before performing the operation 430) generated based on compression swap. For example, the Anonymous RSS - the swap RSS of Equation 1 may indicate the size of information that may be compressed based on a compression swap in the portion of the volatile memory corresponding to the specific process.

A correction coefficient of Equation 1 may be compression efficiency identified from the history stored based on the operation 370 of FIG. 3. The compression efficiency may be set or stored in each of the plurality of processes of the operation 420. The electronic device may access a database for storing the history to identify the correction coefficient of Equation 1. The electronic device may search the database to obtain a correction coefficient of a specific process. The electronic device may identify the correction coefficient corresponding to the specific process from the database. The correction coefficient may be calculated as Equation 2.

【 Equation 2】

$$correction\ coefficient = \frac{Swap\ RSS_f}{Swap\ RSS_i + Anonymous\ RSS_i}$$

Swap $RSS_i$ and Anonymous $RSS_i$ of Equation 2 may indicate a Swap RSS value and an Anonymous RSS value before performing the compression swap. Swap $RSS_f$ of Equation 2 may be a Swap RSS value after performing the compression swap. That is, the correction coefficient may be a rate (or rate of change) at which the size of a portion of the volatile memory corresponding to a process is changed based on the compression swap.

The electronic device may determine size increments of Equation 1, corresponding to each of the plurality of processes of the operation 420. The electronic device that calculates the size increments of the plurality of processes may perform an operation 440.

Referring to FIG. 4, in the operation 440, the electronic device may generate a list of processes for compression swap based on the calculated size increments. The electronic device may generate or identify the list of the operation 440 indicating a target of the compression swap, based on a descending order of size increments. For example, starting from a process having the largest size increment, it may be included in the list of the operation 440. The electronic device may repeatedly add at least one of the plurality of processes of the operation 420 to the list of the operation 440, until a sum of size increments corresponding to the processes included in the list is greater than or equal to the size identified by the operation 410. Since the list of the operation 440 is generated based on a descending order of size increments, the electronic device may determine whether to perform the compression swap for each of the plurality of processes of the operation 420 using the size increments corresponding to each of the plurality of processes.

As described above, the electronic device may obtain or generate the list of the processes to be controlled to add the available space of the volatile memory to load the information of the operation 410. The electronic device may identify one or more processes determined to perform compression, among the plurality of processes of the operation 420, to obtain the additional available space. The electronic device may filter or select the one or more processes using the size increment of the operation 430.

Table 2 is pseudo code corresponding to an operation of the electronic device described with reference to FIG. 4.

[Table2]

| Row number | Pseudo Code |
|---|---|
| 1 | # Process swap ratio database<br>process_swap_ratio_db = {} |
| 2 | def_load_model(model_name, model_size): |
| 3 | # Compare available memory with model size, and terminate function when model size is larger than available memory.<br>if model_size > available_memory:<br>return |
| 4 | # Get unkillable process list.<br>unkillable_process_list = get_unkillable_process_list() |
| 5 | # Initialize swapable process size list<br>process_swappable_size_list = [] |
| 6 | # Execute repeat statement with respect to unkillable process list.<br>for process in unkillable_process_list: |
| 7 | # Get Anon RSS and Swap RSS.<br>anon_rss = process.anon_rss<br>swap_rss = process.swap_rss<br>swap_ratio_db = process_swap_ratio_db[process] |
| 8 | # Calculate swappable Anon_RSS by applying swap ratio.<br>swappable _anon _rss = swap_ratio_db * (anon_rss - swap_rss) |
| 9 | # Add swapable process size list.<br>process_swappable_size_list.append((process, swappable_anon_rss)) |
| 10 | # Arrange swapable process size list.<br>process_swappable_size_list.sort() |
| 11 | # Initialize candidate process list.<br>candidate_process_list = [] |
| 12 | # Set target reclaim size, and<br>target_reclaim_size = model_size |
| 13 | # Repeat until target reclaim size is greater than 0.<br>while target_reclaim_size > 0: |
| 14 | # Take process and size of first element, add size of first element to candidate process list, and subtract corresponding size from target reclaim size.<br>process, size = process_swappable_size_list.first_element()<br>candidate_process_list.append(process)<br>target_reclaim_size -= size |
| 15 | # Perform swap.<br>return do_swap(candidate_process_list, model_name) |

"#" of Table 2 indicates that a line starting with the "#" is an annotation. Referring to the Row number column of Table 2, a variable having the name "process_swap_ratio_db" of a first row may be declared. A correction coefficient of Equations 1 to 2 may be stored in the variable. In the variable, a pair between the correction coefficient and the process may be stored. A command and/or an API having the name "load_model" of a second row may be defined to execute operations indicated by the operation of FIG. 4, the operation 340 of FIG. 3, and/or pseudo code of a third row to a fifteenth row of Table 2. Pseudo code of the third row may indicate an operation of determining whether to perform an operation (e.g., the operations 340 and 350 of FIG. 3, and/or the operations of FIG. 4) for increasing the size of the available space of the volatile memory in the operation 330 of FIG. 3.

Referring to Table 2, pseudo code of a fourth row may indicate an operation of identifying the process of the operation 420. A variable having the name "process_swappable_size_list" of a fifth row may be declared in the volatile memory to store the size increments of the operation 430. Pseudo code of a sixth row may indicate an operation of repeatedly performing pseudo code of the seventh row to the ninth row of Table 1. The pseudo code of the sixth row may indicate that an operation indicated by the pseudo code of the seventh row to the ninth row is performed for all of the plurality of processes identified based on the operation 420. The pseudo code of the sixth row may indicate that operations indicated by the pseudo code of the seventh row to the ninth row are repeatedly performed by corresponding to each of the plurality of processes of the operation 420. For example, the pseudo code of the sixth row to the ninth row may be associated with the operation 430.

Referring to Table 2, the pseudo code of the seventh row to the eighth row may indicate an operation of calculating the size increment of Equation 1. The anon_rss, the swap_rss, and the swap_ratio_db of the seventh row may correspond to each of the Anonymous RSS, the Swap RSS, and the correction coefficient of Equation 1. The pseudo code of the ninth row may indicate an operation of adding a process corresponding to a size increment calculated by executing the pseudo codes of the seventh row to the eighth row to the list of the operation 440.

Referring to Table 2, a pseudo code of a tenth row may indicate an operation of arranging the size increments of the operation 430 in descending order. A pseudo code of an eleventh row may indicate an operation of declaring or initializing a variable in which the list of the operation 440 is to be stored. A size (e.g., the size identified by the operation 410) included in a command of the second row may be stored in a "target_reclaim_size" variable of a twelfth row. A pseudo code of a thirteenth row may indicate that pseudo code of a fourteenth row is repeatedly performed while the "target_reclaim_size" variable of the eleventh row is greater than 0. The pseudo code of the fourteenth row may indicate an operation of sequentially adding a process to a list declared by the pseudo code of the eleventh row, using a list of a process based in a size increments arranged by the pseudo code of the tenth row.

Referring to Table 2, the electronic device may remove an initial process (e.g., a process corresponding to the largest size increment in the list) of the list (a variable having a name "process_swappable_size_list") arranged based on the tenth row from the list, and add (insert, or append) the process removed from the list to the declared list (a variable having a name "candidate_process_list") based on the eleventh row. The electronic device may decrease a value of the "target_reclaim_size" variable initialized to the size identified by the operation 410 based on the twelfth row by a size increment corresponding to the process removed from the list.

While the pseudo code of the fourteenth row is repeatedly executed, the process included in the list of the tenth row may be sequentially moved to the list of the eleventh row, and the variable of the twelfth row may be gradually decreased by a size increment of the moved process. The pseudo code of the fourteenth row may be repeatedly executed until a sum of a size increments of the processes included in the list of the eleventh row increases to an initial value (e.g., the size of the operation 410) of the variable of the twelfth row.

Referring to Table 2, the pseudo code of the fifteenth row may indicate an operation of executing a reclaim function (e.g., a compression swap and/or a storage swap) based on the list of the eleventh row. Hereinafter, an operation of the first processor, executed by the pseudo code of the fifteenth row, will be described with reference to FIG. 5.

FIG. 5 illustrates a flowchart of an operation of an electronic device performing the reclaim function. The electronic device 101 of FIGS. 1 to 2 and/or the CPU 210 of FIG. 2 may be configured to perform the operations of the electronic device of FIG. 4. An operation of FIG. 5 may be associated with at least one (e.g., the operation 350) of the operations of FIG. 3. For example, the electronic device may perform at least one of the operations of FIG. 5 based on the list of the operation 340 of FIG. 3.

Referring to FIG. 5, in an operation 510, the electronic device may identify an execution state of a CPU. The execution state of the operation 510 may include PSI. For example, the electronic device may identify or obtain an execution state, including a usage rate of the CPU, indicated by the CPU.

Referring to FIG. 5, in an operation 520, the electronic device may check or identify whether the execution state satisfies a condition for performing a compression swap using a multi-thread (also referred to as multi-threading). In the case that the execution state satisfying the condition of the operation 520 is identified (520-YES), the electronic device may perform an operation 530. In the case that the execution state different from the condition of the operation 520 (or not satisfying the condition) is identified (520-NO), the electronic device may perform an operation 540.

The condition of the operation 520 may be set based on a numeric value (e.g., the usage rate of the CPU) indicating workload of the CPU included in the PSI. For example, in the case that the numeric value is included in a preset range indicating overload of the CPU, the electronic device may determine that the execution state is different from the condition of the operation 520. For example, in the case that the numeric value is included in the preset range, the electronic device may determine that the execution state satisfies the condition of the operation 520.

The electronic device may check the condition of the operation 520 to determine the number of threads to be generated to execute the reclaim function such as the compression swap. For example, in the case that the condition of the operation 520 is satisfied, the electronic device may determine the number of threads to be executed to obtain an additional available space as a preset number (e.g., 1). In the case that the condition of the operation 520 is not satisfied, the electronic device may determine the number of threads as a number (e.g., a natural number exceeding 1) greater than the preset number.

Referring to FIG. 5, in the operation 530, the electronic device may perform the compression swap using a multi-thread. For example, the electronic device may perform the compression swap in parallel (or substantially simultaneously) using a plurality of threads. For example, in the case that the CPU includes a plurality of core circuits, two or more core circuits may be controlled to perform the compression swap for distinct processes. The thread performing the compression swap may be configured to compress a portion of volatile memory, allocated to a process executed by the CPU, to obtain the additional available space in the volatile memory. For example, the electronic device may obtain the additional available space in the volatile memory using a multi-thread, based on the execution state (e.g., an execution state different from the overload of the CPU) that satisfies the condition of the operation 520.

In the case that the electronic device generates a list of a plurality of processes to perform the compression swap by using the operation 340 of FIG. 3 and/or the operations of FIG. 4, the electronic device may allocate the plurality of processes included in the list to each of the plurality of threads generated based on the operation 530. Each of the plurality of threads may perform the compression swap for the distinct processes included in the list.

Referring to FIG. 5, in the operation 540, the electronic device may perform the compression swap using a single thread. For example, the electronic device may perform the compression swap using one thread. In the case that the electronic device generates the list of the plurality of processes to perform the compression swap by using the operation 340 of FIG. 3 and/or the operations of FIG. 4, the electronic device may repeatedly perform the compression swap of the plurality of processes included in the list by using the thread of the operation 540. For example, among the plurality of core circuits of the CPU, a single core circuit may be controlled to perform the operation 540. For example, the electronic device may obtain the additional available space in the volatile memory for loading a large amount of information (e.g., the model data 269 of FIG. 2) by using the single thread, based on an execution state (e.g., an execution state indicating overload and/or throttling of the CPU) that is different from (does not satisfy) the condition of the operation 520.

Referring to the operations 520, 530, and 540 of FIG. 5, the electronic device may determine the number of threads to be executed to perform the compression swap based on the execution state of the CPU. The electronic device may obtain the additional available space in the volatile memory for loading the large amount of information such as a trained model by executing the number of threads determined according to the execution state of the CPU. Compressed information may be generated or stored in the volatile memory based on the operations 530 and 540.

Referring to FIG. 5, in an operation 550, the electronic device may perform a storage swap with respect to compressed data generated in the volatile memory by performing the compression swap. The compressed data of the operation 550 may be a result of performing the compression swap of the operations 530 and 540. The electronic device may move the compressed data of the operation 550 to virtual memory (e.g., the virtual memory space 261 of FIG. 2) formed in non-volatile memory (e.g., the non-volatile memory 222 of FIG. 2). The electronic device may release a portion of the volatile memory in which the compressed data is stored based on the movement. The size of an available space of the volatile memory may be increased based on the release. For example, the size of the available space may be increased by the size of the released portion. The operation 550 may be performed to maximize the size of the available space of the volatile memory.

Table 3 is pseudo code corresponding to an operation of the electronic device described with reference to FIG. 5.

[Table 3]

| Row number | Pseudo code |
|---|---|
| 1 | # Set maximum number of thread<br>max_thread_count = 4 |
| 2 | # Swap processing function<br>def do_swap(model_name, candidate_process_list): |
| 3 | # Get CPU PSI value<br>cpu_psi = get_cpu_psi() |
| 4 | # Set number of initial threads<br>thread_count = max_thread_count |
| 5 | # When CPU usage rate is 50% or higher, adjust number of threads to two<br>if cpu_psi > 0.5:<br>thread_count = 2 |

(continued)

| Row number | Pseudo code |
|---|---|
| 6 | # When CPU usage rate is 80% or higher, adjust number of threads to one<br>if cpu_psi > 0.8:<br>thread_count = 1 |
| 7 | # Generate thread pool and add task<br>thread_pool = Thread(do_compress_swap_and_storage_swap, thread_count)<br>thread_id = 0<br>for process in candidate_process_list:<br>thread_pool[thread_id % thread_count].append(process)<br>thread_id += 1 |
| 8 | # Start thread pool<br>thread_pool.submit() |
| 9 | # Perform post processing<br>return post_processing(model_name, candidate_process_list) |

"#" of Table 3 indicates that a line starting with the "#" is an annotation. Referring to the Row number column of Table 3, a maximum value (e.g., 4) of threads to be generated based on the operation 530 may be stored in a variable having a name of "max_thread_count" of a first row. The maximum value of the threads in the operation 530 is not limited to the pseudo code of Table 3. A command and/or an API having the name "do_swap" of a second row may be defined to perform the operation 350 of FIG. 3, the operations of FIG. 5, and/or an operation indicated by pseudo code of a third row to a ninth row of Table 3. Referring to the second row, an identifier (e.g., a name and/or an identifier of the model data 269 of FIG. 2) of information to be loaded into the volatile memory and/or a list of a plurality of processes (e.g., the list of the operation 340 of FIG. 3 and/or the list of the operation 440 of FIG. 4) may be required to perform the operation 350 of FIG. 3 and/or the operations of FIG. 5.

Referring to Table 3, a pseudo code of the third row may indicate an operation of obtaining the usage rate of the CPU included in the PSI, and may correspond to an operation of obtaining the execution state of the operation 510. A pseudo code of a fourth row may indicate an operation of initializing (e.g., setting the maximum value of) the number of threads to be generated for the compression swap. Pseudo code of a fifth row and/or a sixth row may indicate an operation of changing the number of threads according to a range of the usage rate of the CPU. For example, in the case that the usage rate of the CPU is greater than 80%, the number may be decreased to 1 (e.g., the single thread of the operation 540). For example, in the case that the usage rate of the CPU is greater than 50% and less than or equal to 80%, the number may be decreased to 2. For example, in the case that the CPU usage rate is less than or equal to 50%, the number may be maintained at the maximum value. The pseudo code has been described in which the electronic device compares the usage rate with three preset ranges, but is not limited thereto.

Referring to Table 3, a pseudo code of a seventh row may indicate an operation of generating threads according to the number determined by the pseudo code of the fourth row to the sixth row. The electronic device may generate the threads to perform the compression swap and the storage swap according to the number determined by the pseudo code of the fourth row to the sixth row. The electronic device may equally allocate processes included in a list (e.g., the list of the operation 340 of FIG. 3 and/or the operation 440 of FIG. 4) to the generated threads. A pseudo code of an eighth row may indicate an operation of executing threads generated based on the seventh row (using the usage rate of the CPU). The pseudo code of the ninth row may correspond to the operation 370 of FIG. 3.

Table 4 is pseudo code corresponding to a sub-routine (e.g., a sub-routine having a name of "post_processing") and/or the operation 370 of FIG. 3 executed by the pseudo code of the ninth row.

[Table 4]

| Row number | Pseudo Code |
|---|---|
| 1 | # Initialize model size database and process exchange rate database<br>model_size_db = {}<br>process_swap_ratio_db = {} |
| 2 | # Function that takes model name and a list of swap completion processes as factor def post_processing(model_name, swapped_process_list): |

(continued)

| Row number | Pseudo Code |
|---|---|
| 3 | # Process each candidate process one by one for process in candidate_process_list: |
| 4 | # Get AnonRSS and SwapRSS value<br>anon_rss = process.anon_rss<br>swap_rss = process.swap_rss |
| 5 | # Reference to database that stores swap ratio of corresponding process<br>swap_ratio_db =<br>process_swap_ratio_db[process] |
| 6 | # Update swap ratio (e.g., Calculate with moving average)<br>process_swap_ratio_db[process].update(anon_rss / swap_rss, how="moving_average") |
| 7 | # Get actual model size and add actual model |
| | size to model size database |
| | model_size_db[model_name] = get_actual_model_size (model_name) |

"#" of Table 4 indicates that a line starting with the "#" is an annotation. Referring to the Row number column of Table 4, a database for storing the history of the operation 370 in a first row may be declared. Information for identifying information of the operation 310 may be stored in a variable having a name of "model_size_db" of the first row. A correction coefficient (e.g., a correction coefficient of Equation 1 and/or Equation 2) for the information of the operation 310 may be stored in a variable having the name "process_swap_ratio_db" of the first row. A command and/or an API having the name "post_processing" of a second row may be defined to perform operations indicated by the operation 370 of FIG. 3 and/or pseudo codes of a third row to a seventh row of Table 4.

Referring to Table 4, the pseudo code of the third row may indicate that operations indicated by pseudo code of a fourth row to a sixth row are repeatedly performed. For example, operations indicated by the pseudo code of the fourth row to the sixth row may be repeatedly performed for each of the processes in the list of the operation 340 of FIG. 3 and/or the operation 440 of FIG. **4.**

Referring to Table 4, the pseudo code of the fourth row may indicate an operation of identifying a size of a portion of the volatile memory corresponding to a specific process (e.g., the process in the list). For example, "anon_rss" may correspond to a size (e.g., the Anonymous RSS of Equation 1) of a portion where information not connected to storage, such as the non-volatile memory, is stored, and "swap_rss" may correspond to a size (e.g., the Swap RSS of Equation 1)of result data of the compression swap stored in the volatile memory, in the portion.

Referring to Table 4, the pseudo code of a fifth row may be stored in a database and indicate an operation of obtaining a correction coefficient corresponding to the specific process. The pseudo code of the sixth row may indicate an operation of updating a database using the obtained correction coefficient and numeric values (e.g., numeric values stored in variables having names of "non_rss" and "swap_rss") identified based on the fourth row. For example, the electronic device may update the correction coefficient stored in the database using the correction coefficient and a moving average of a ratio (anon_rss / swap_rss) calculated based on the numeric values identified based on the fourth row. The pseudo code of the seventh row of Table 5 may indicate an operation of storing a size of information loaded into the volatile memory (e.g., an actual size of information loaded into the volatile memory) in the database based on the operation 360 of FIG. 3.

FIG. 6 schematically illustrates information stored in volatile memory managed by an electronic device according to an embodiment. The electronic device 101 of FIGS. 1 to 2 and/or the CPU 210 of FIG. 2 may be configured to perform the operations of the electronic device of FIG. 4. An operation of the electronic device described with reference to FIG. 6 may be associated with the operation 350 of FIG. 3 and/or the operations of FIG. 5. For example, the electronic device may perform the operation described with reference to FIG. 6 for the process included in the list of the operation 340 of FIG. 3.

Referring to FIG. 6, an exemplary state of volatile memory 221 occupied by processes executed by the electronic device is illustrated. For example, a memory management process 251 and n processes (e.g., a first process 252-1 to a nth process 252-n), which perform the operations described with reference to FIGS. 1 to 5, may be associated with distinct portions of the volatile memory 221. The electronic device may monitor or identify the size of a remaining portion (e.g., an available space (as)) of the volatile memory 221 different from the portions.

The electronic device may identify an event (the event of the operation 310) that loads a large amount of information, such as a trained model, into the volatile memory 221, using a software application loaded into the volatile memory 221. The electronic device may identify a command (e.g., the command having the name "load_model," as exemplified in the second row of Table 1) including the size of the trained model from the software application, based on the event. The electronic device identifying the command may execute a reclaim function for loading the trained model.

As described above with reference to FIGS. 1 to 5, the electronic device may execute a reclaim function based on a compression swap. Alternatively, the electronic device may directly terminate a process. For example, the electronic device may terminate a second process 252-3 (e.g., a process having a different state from a preset state of the operation 420 of FIG. 4). When terminating the second process 252-3 based on a kill command, the electronic device may change a portion of the volatile memory 221 associated with the second process 252-3 to an available space.

Referring to FIG. 6, an exemplary case in which a portion of the volatile memory 221 allocated to the first process 252-1 is set as a portion between an a1 address and an a2 address in an address space for the volatile memory 221 is illustrated. The portion between the a1 address and the a2 address may be distinguished into an area 610 where instructions are stored, a global area 620, a heap area 630, and a stack area 640. The instructions stored in the area 610 may be loaded to a CPU or cached. Information included in a global variable defined by the instructions may be stored in the global area 620. Information generated at least temporarily by executing the instructions may be stored in the heap area 630. For example, information may be stored in the heap area 630, based on an API and/or a command called to store a variable and/or information in the heap area 630. Information generated at least temporarily by executing the instructions may be stored in the stack area 640. The heap area 630 may be set to increase toward the a2 address. The stack area 640 may be set to increase from the a2 address toward the a1 address.

The Anonymous RSS described above with reference to Equation 1, that is, in a portion (e.g., a portion including all of the area 610 to the stack area 640) of the volatile memory corresponding to a specific process, a portion not connected to storage, such as non-volatile memory, may include the heap area 630 of FIG. 6. For example, the compression swap of the operations 530 and 540 of FIG. 5 may include an operation of storing the information included in the heap area 630. For example, in the case that the first process 252-1 is included in the list of the operation 340 of FIG. 3 and/or the operation 440 of FIG. 4, the electronic device may compress the information included in the heap area 630 among a portion of the volatile memory 221 allocated to the first process 252-1. The electronic device may move the information obtained based on the compression to another portion of the volatile memory 221 for storing a compression result (the compression swap). The electronic device may move the information obtained based on the compression to the non-volatile memory (e.g., the non-volatile memory 222 and/or the virtual memory space 261 of FIG. 2) (a storage swap).

In the case that the electronic device at least partially compresses the information stored in the heap area 630 by performing a compression swap for the first process 252-1, the size of the available space of the volatile memory 221 may be increased in a range less than or equal to the size of the heap area 630 based on the compression swap. When the electronic device performs the compression swap for a plurality of processes based on the list of the operations 340, the size of the available space of the volatile memory 221 may be increased by the sum of sizes of heap areas (e.g., the heap area 630) of the volatile memory 221, corresponding to each of the plurality of processes.

FIG. 7 illustrates a graph 700 for describing the change in an available space (e.g., the available space (as) of FIG. 2 and/or FIG. 6) of volatile memory (e.g., the volatile memory 221 of FIG. 2).

Referring to FIG. 7, the graph 700 indicating a usage capacity of the volatile memory is illustrated. The term "max" of the graph 700 may indicate a total capacity of the volatile memory. It is assumed that an electronic device has identified an event to load a trained model at a time point t1 of the graph 700. The trained model may be loaded into the volatile memory, from a time point t3 after the time point t1.

The electronic device may execute a reclaim function described with reference to FIGS. 1 to 6, in a time interval between the time point t1 to the time point t3. For example, when executing the reclaim function to load the trained model having a size M, the size of the available space of the volatile memory may be increased up to the size M. For example, at the time point t2 after the time point t1, the usage capacity of the volatile memory may be decreased from a total capacity max to a size decreased by the size M (max-M). As the trained model is loaded from the time point t3, the usage capacity of the volatile memory may be increased again.

Since the size of the available space of the volatile memory is greater than or equal to the size M of the trained model, while the trained model is loaded, the volatile memory may not be saturated. Experimentally, since the reclaim function according to saturation is no longer executed, the time for the trained model to load was decreased by 21%. For example, in the case of loading model data (e.g., the model data 269 of FIG. 2) having the size M of 2 GB, the time to load the trained model was decreased by at least 0.14 seconds, as the model data was loaded without saturation (or without execution of the reclaim function) after the time point t3.

As described above, when loading a large amount of information into the volatile memory, the electronic device may preemptively execute the reclaim function based on the size of the large amount of information. The electronic device may calculate the available space that may be obtained based on the compression swap with respect to a process (e.g., an unkillable process) that requires a compression swap and/or a storage swap. The electronic device may perform a compression swap for one or more processes based on the calculated available space. The electronic device may terminate a process based on a kill command with respect to a process (e.g., a killable process) that is capable of terminating, and change a portion of the volatile memory allocated to the process to the available space. The electronic device may generate the available space as large as a size of the large amount information, based on the operation.

Hereinafter, an exemplary hardware configuration of the electronic device 101 described with reference to FIGS.

1 and 2 will be described with reference to FIG. 8.

FIG. 8 is a block diagram illustrating an electronic device 801 in a network environment 800 according to various embodiments. Referring to FIG. 8, the electronic device 801 in the network environment 800 may communicate with an electronic device 802 via a first network 898 (e.g., a short-range wireless communication network), or at least one of an electronic device 804 or a server 808 via a second network 899 (e.g., a long-range wireless communication network). According to an embodiment, the electronic device 801 may communicate with the electronic device 804 via the server 808. According to an embodiment, the electronic device 801 may include a processor 820, memory 830, an input module 850, a sound output module 855, a display module 860, an audio module 870, a sensor module 876, an interface 877, a connecting terminal 878, a haptic module 879, a camera module 880, a power management module 888, a battery 889, a communication module 890, a subscriber identification module(SIM) 896, or an antenna module 897. In some embodiments, at least one of the components (e.g., the connecting terminal 878) may be omitted from the electronic device 801, or one or more other components may be added in the electronic device 801. In some embodiments, some of the components (e.g., the sensor module 876, the camera module 880, or the antenna module 897) may be implemented as a single component (e.g., the display module 860).

The processor 820 may execute, for example, software (e.g., a program 840) to control at least one other component (e.g., a hardware or software component) of the electronic device 801 coupled with the processor 820, and may perform various data processing or computation. According to an embodiment, as at least part of the data processing or computation, the processor 820 may store a command or data received from another component (e.g., the sensor module 876 or the communication module 890) in volatile memory 832, process the command or the data stored in the volatile memory 832, and store resulting data in non-volatile memory 834. According to an embodiment, the processor 820 may include a main processor 821 (e.g., a central processing unit (CPU) or an application processor (AP)), or an auxiliary processor 823 (e.g., a graphics processing unit (GPU), a neural processing unit (NPU), an image signal processor (ISP), a sensor hub processor, or a communication processor (CP)) that is operable independently from, or in conjunction with, the main processor 821. For example, when the electronic device 801 includes the main processor 821 and the auxiliary processor 823, the auxiliary processor 823 may be adapted to consume less power than the main processor 821, or to be specific to a specified function. The auxiliary processor 823 may be implemented as separate from, or as part of the main processor 821.

The auxiliary processor 823 may control at least some of functions or states related to at least one component (e.g., the display module 860, the sensor module 876, or the communication module 890) among the components of the electronic device 801, instead of the main processor 821 while the main processor 821 is in an inactive (e.g., sleep) state, or together with the main processor 821 while the main processor 821 is in an active state (e.g., executing an application). According to an embodiment, the auxiliary processor 823 (e.g., an image signal processor or a communication processor) may be implemented as part of another component (e.g., the camera module 880 or the communication module 890) functionally related to the auxiliary processor 823. According to an embodiment, the auxiliary processor 823 (e.g., the neural processing unit) may include a hardware structure specified for artificial intelligence model processing. An artificial intelligence model may be generated by machine learning. Such learning may be performed, e.g., by the electronic device 801 where the artificial intelligence is performed or via a separate server (e.g., the server 808). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 830 may store various data used by at least one component (e.g., the processor 820 or the sensor module 876) of the electronic device 801. The various data may include, for example, software (e.g., the program 840) and input data or output data for a command related thereto. The memory 830 may include the volatile memory 832 or the non-volatile memory 834.

The program 840 may be stored in the memory 830 as software, and may include, for example, an operating system (OS) 842, middleware 844, or an application 846.

The input module 850 may receive a command or data to be used by another component (e.g., the processor 820) of the electronic device 801, from the outside (e.g., a user) of the electronic device 801. The input module 850 may include, for example, a microphone, a mouse, a keyboard, a key (e.g., a button), or a digital pen (e.g., a stylus pen).

The sound output module 855 may output sound signals to the outside of the electronic device 801. The sound output module 855 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 860 may visually provide information to the outside (e.g., a user) of the electronic device 801. The display module 860 may include, for example, a display, a hologram device, or a projector and control circuitry to control a corresponding one of the display, hologram device, and projector. According to an embodiment, the display module 860 may include a touch sensor adapted to detect a touch, or a pressure sensor adapted to measure the intensity of force incurred by the touch.

The audio module 870 may convert a sound into an electrical signal and vice versa. According to an embodiment, the audio module 870 may obtain the sound via the input module 850, or output the sound via the sound output module 855 or a headphone of an external electronic device (e.g., an electronic device 802) directly (e.g., wiredly) or wirelessly coupled with the electronic device 801.

The sensor module 876 may detect an operational state (e.g., power or temperature) of the electronic device 801 or an environmental state (e.g., a state of a user) external to the electronic device 801, and then generate an electrical signal or data value corresponding to the detected state. According to an embodiment, the sensor module 876 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 877 may support one or more specified protocols to be used for the electronic device 801 to be coupled with the external electronic device (e.g., the electronic device 802) directly (e.g., wiredly) or wirelessly. According to an embodiment, the interface 877 may include, for example, a high definition multimedia interface (HDMI), a universal serial bus (USB) interface, a secure digital (SD) card interface, or an audio interface.

A connecting terminal 878 may include a connector via which the electronic device 801 may be physically connected with the external electronic device (e.g., the electronic device 802). According to an embodiment, the connecting terminal 878 may include, for example, an HDMI connector, a USB connector, a SD card connector, or an audio connector (e.g., a headphone connector).

The haptic module 879 may convert an electrical signal into a mechanical stimulus (e.g., a vibration or a movement) or electrical stimulus which may be recognized by a user via his tactile sensation or kinesthetic sensation. According to an embodiment, the haptic module 879 may include, for example, a motor, a piezoelectric element, or an electric stimulator.

The camera module 880 may capture a still image or moving images. According to an embodiment, the camera module 880 may include one or more lenses, image sensors, image signal processors, or flashes.

The power management module 888 may manage power supplied to the electronic device 801. According to an embodiment, the power management module 888 may be implemented as at least part of, for example, a power management integrated circuit (PMIC).

The battery 889 may supply power to at least one component of the electronic device 801. According to an embodiment, the battery 889 may include, for example, a primary cell which is not rechargeable, a secondary cell which is rechargeable, or a fuel cell.

The communication module 890 may support establishing a direct (e.g., wired) communication channel or a wireless communication channel between the electronic device 801 and the external electronic device (e.g., the electronic device 802, the electronic device 804, or the server 808) and performing communication via the established communication channel. The communication module 890 may include one or more communication processors that are operable independently from the processor 820 (e.g., the application processor (AP)) and supports a direct (e.g., wired) communication or a wireless communication. According to an embodiment, the communication module 890 may include a wireless communication module 892 (e.g., a cellular communication module, a short-range wireless communication module, or a global navigation satellite system (GNSS) communication module) or a wired communication module 894 (e.g., a local area network (LAN) communication module or a power line communication (PLC) module). A corresponding one of these communication modules may communicate with the external electronic device via the first network 898 (e.g., a short-range communication network, such as Bluetooth™, wireless-fidelity (Wi-Fi) direct, or infrared data association (IrDA)) or the second network 899 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 892 may identify and authenticate the electronic device 801 in a communication network, such as the first network 898 or the second network 899, using subscriber information (e.g., international mobile subscriber identity (IMSI)) stored in the subscriber identification module 896.

The wireless communication module 892 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 892 may support a high-frequency band (e.g., the mmWave band) to achieve, e.g., a high data transmission rate. The wireless communication module 892 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 892 may support various requirements specified in the electronic device 801, an external electronic device (e.g., the electronic device 804), or a network system (e.g., the second network 899). According to an embodiment, the wireless communication module 892 may support a peak data rate (e.g., 20Gbps or more) for implementing eMBB, loss coverage (e.g., 864dB or less) for implementing mMTC, or U-plane latency (e.g., 0.5ms or less for each of downlink (DL) and uplink (UL), or a round trip of 8ms or less) for implementing URLLC.

The antenna module 897 may transmit or receive a signal or power to or from the outside (e.g., the external electronic device) of the electronic device 801. According to an embodiment, the antenna module 897 may include an antenna including a radiating element composed of a conductive material or a conductive pattern formed in or on a substrate (e.g., a printed circuit board (PCB)). According to an embodiment, the antenna module 897 may include a plurality of antennas (e.g., array antennas). In such a case, at least one antenna appropriate for a communication scheme used in the communication network, such as the first network 898 or the second network 899, may be selected, for example, by the communication module 890 (e.g., the wireless communication module 892) from the plurality of antennas. The signal or the power may then be transmitted or received between the communication module 890 and the external electronic device via the selected at least one antenna. According to an embodiment, another component (e.g., a radio frequency integrated circuit (RFIC)) other than the radiating element may be additionally formed as part of the antenna module 897.

According to various embodiments, the antenna module 897 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 801 and the external electronic device 804 via the server 808 coupled with the second network 899. Each of the electronic devices 802 or 804 may be a device of a same type as, or a different type, from the electronic device 801. According to an embodiment, all or some of operations to be executed at the electronic device 801 may be executed at one or more of the external electronic devices 802, 804, or 808. For example, if the electronic device 801 should perform a function or a service automatically, or in response to a request from a user or another device, the electronic device 801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 801. The electronic device 801 may provide the outcome, with or without further processing of the outcome, as at least part of a reply to the request. To that end, a cloud computing, distributed computing, mobile edge computing (MEC), or client-server computing technology may be used, for example. The electronic device 801 may provide ultra low-latency services using, e.g., distributed computing or mobile edge computing. In another embodiment, the external electronic device 804 may include an internet-of-things (IoT) device. The server 808 may be an intelligent server using machine learning and/or a neural network. According to an embodiment, the external electronic device 804 or the server 808 may be included in the second network 899. The electronic device 801 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 840) including one or more instructions that are stored in a storage medium (e.g., internal memory 836 or external memory 838) that is readable by a machine (e.g., the electronic device 801). For example, a processor (e.g., the processor 820) of the machine (e.g., the electronic device 801) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added. The electronic device 801 of FIG. 8 may be an example of the electronic device 101 of FIGS. 1 and 2.

In an embodiment, a method of rapidly executing a function based on artificial intelligence may be required. In an embodiment, a method of rapidly and/or stably obtaining (or causing) an available space of volatile memory, required to execute a trained model to support the artificial intelligence may be required. In an embodiment, a method of rapidly loading or storing a large amount of information into the volatile memory may be required. As described above, an electronic device (e.g., the electronic device 101 of FIG. 1 and/or the electronic device 801 of FIG. 8) may comprise non-volatile memory (e.g., the non-volatile memory 222 of FIG. 2) comprising one or more storage media and storing instructions, volatile memory (e.g., the volatile memory 221 of FIG. 2), and a processor (e.g., the CPU 210 of FIG. 2) comprising processing circuitry. The instructions, when executed by the processor, may cause the electronic device to identify an event to load a trained model into the volatile memory while executing a software application. The instructions, when executed by the processor, may cause the electronic device to, based on the event, identify a command indicating a size of the trained model to be loaded into the volatile memory. The command may be generated by the software application. The instructions, when executed by the processor, may cause the electronic device to, based on the size of the trained model indicated by the command being larger than a size of an available space within the volatile memory, identify an execution state of the processor. The instructions, when executed by the processor, may cause the electronic device to, based on an execution state of the processor in a first execution state, obtain an additional available space within the volatile memory for loading the trained model using a single thread. The instructions, when executed by the processor, may cause the electronic device to, based on an execution state of the processor in a second execution state, obtain the additional available space using a multi-thread. According to an embodiment, the electronic device may execute a function based on the artificial intelligence. According to an embodiment, the electronic device may rapidly and/or stably obtain or cause the available space of the volatile memory, required to execute the trained model to support the artificial intelligence. According to an embodiment, the electronic device may rapidly load the large amount of information into the volatile memory.

For example, the instructions, when executed by the processor, may cause the electronic device to, based on the command, identify a plurality of processes having a preset state. The instructions, when executed by the processor, may cause the electronic device to, based on identifying the plurality of processes, identify distinct portions of the volatile memory respectively allocated to the plurality of processes. The instructions, when executed by the processor, may cause the electronic device to, based on identifying each of the portions, calculate a size increment of the available space to be increased by compressing a portion. The instructions, when executed by the processor, may cause the electronic device to, based on the calculated size increment, determine whether to perform compressing with respect to a process corresponding to the calculated size increment.

For example, the instructions, when executed by the processor individually or collectively, may cause the electronic device to, to obtain the additional available space, identify one or more processes determined to perform compressing, among the plurality of processes. The instructions, when executed by the processor, may cause the electronic device to execute at least one thread corresponding to the one or more processes.

For example, the instructions, when executed by the processor individually or collectively, may cause the electronic device to search the plurality of processes having the preset state indicating uninterruptible sleep.

For example, the instructions, when executed by the processor individually or collectively, may cause the electronic device to, to obtain the additional available space, move compressed data generated in the volatile memory by performing the compression, to a virtual memory space formed in the non-volatile memory from the volatile memory.

For example, the instructions, when executed by the processor individually or collectively, may cause the electronic device to, to obtain the additional available space, execute a kill command with respect to another process to change a portion of the volatile memory associated with the another process having a state different from the preset state, to the available space.

For example, the instructions, when executed by the processor, which is a central processing unit (CPU), may cause the electronic device to store the trained model within the available space in the volatile memory including the additional available space. The instructions, when executed by the processor which is the central processing unit (CPU), may cause the electronic device to control a neural processing unit (NPU) to execute the trained model stored in the available space.

For example, the instructions, when executed by the processor, may cause the electronic device to identify the execution state using pressure stall information (PSI) of the processor.

As described above, in an embodiment, a non-transitory computer readable storage medium for storing instructions may be provided. The instructions, when executed by an electronic device including volatile memory, may cause the electronic device to identify an event to load a trained model into the volatile memory using a software application to be loaded into the volatile memory. The instructions, when executed by the electronic device, may cause the electronic device to, based on the event, identify a command indicating a size of the trained model to be loaded into the volatile memory. The command may be generated by the software application. The instructions, when executed by the electronic device, may cause the electronic device to, based on the size of the trained model indicated by the command being larger than a size of an available space within the volatile memory, identify an execution state of the processor. The instructions, when executed by the electronic device, may cause the electronic device to, based on an execution state of the processor in a first execution state, obtain an additional available space within the volatile memory for loading the trained model according to a single thread. The instructions, when executed by the electronic device, may cause the electronic device to, based on an execution state of the processor in a second execution state, obtain the additional available space according to a multi-thread.

For example, the instructions, when executed by the electronic device, may cause the electronic device to, based on the command, identify a plurality of processes having a preset state. The instructions, when executed by the electronic device, may cause the electronic device to, based on identifying the plurality of processes, identify distinct portions of the volatile memory respectively allocated to the plurality of processes. The instructions, when executed by the electronic device, may cause the electronic device to, based on identifying each of the portions, calculate a size increment of the available space to be increased by compressing a portion. The instructions, when executed by the electronic device, may cause the electronic device to, based on the calculated size increment, determine whether to perform compressing with respect to a process corresponding to the calculated size increment.

For example, the instructions, when executed by the electronic device, may cause the electronic device to, to obtain the additional available space, identify one or more processes determined to perform compression, among the plurality of processes. The instructions, when executed by the electronic device, may cause the electronic device to, by executing at least one thread corresponding to the one or more processes, obtain the additional available space.

For example, the instructions, when executed by the electronic device, may cause the electronic device to search the plurality of processes having the preset state indicating uninterruptible sleep.

For example, the instructions, when executed by the electronic device further including non-volatile memory, may cause the electronic device to, to obtain the additional available space, move compressed data generated in the volatile memory by performing the compression, to a virtual memory space formed in the non-volatile memory from the volatile memory.

For example, the instructions, when executed by the electronic device, may cause the electronic device to, to obtain the additional available space, execute a kill command with respect to another process to change a portion of the volatile memory associated with the another process having a state different from the preset state, to the available space.

For example, the instructions, when executed by the electronic device, may cause the electronic device to store the trained model within the available space in the volatile memory including the additional available space. The instructions, when executed by the electronic device, may cause the electronic device to control a neural processing unit (NPU) to execute the trained model stored in the available space.

For example, the instructions, when executed by the electronic device, may cause the electronic device to identify the execution state using pressure stall information (PSI) of the processor.

As described above, in an embodiment, a method of an electronic device (e.g., the electronic device 101 of FIG. 1 and/or the electronic device 801 of FIG. 8) may be provided. The electronic device may comprise a central processing unit (CPU) (e.g., the CPU 210 of FIG. 2), and volatile memory (e.g., the volatile memory 221 of FIG. 2). The method may comprise identifying an event to load a trained model into the volatile memory using a software application loaded into the volatile memory. The method may comprise, based on the event, identifying a command including a size of the trained model to be loaded into the volatile memory, from the software application. The method may comprise, based on the size of the trained model indicated by the command being larger than a size of an available space within the volatile memory, identifying an execution state of the CPU. The method may comprise, by executing a number of threads wherein the number is determined according to the execution state of the CPU, obtaining an additional available space within the volatile memory for loading the trained model.

For example, the identifying the execution state may comprise identifying the execution state using PSI associated with the CPU.

For example, the identifying the execution state may comprise, based on identifying that a numeric value indicating workload of the CPU included in the PSI is included in a preset range indicating overload, determining a number of the threads to be executed to obtain the additional available space, as a preset number. The identifying the execution state may comprise based on identifying that the numeric value is different from the preset range, determining the number of the threads as another number greater than the preset number.

For example, the thread may be configured to compress a portion of the volatile memory allocated to a process executed by the CPU, to obtain the additional available space.

As described above, according to an embodiment, an electronic device may comprise non-volatile memory storing instructions, including one or more storage media, volatile memory, and a central processing unit (CPU) including processing circuitry. The instructions, when executed by the CPU, may cause the electronic device to identify an event to load a trained model into the volatile memory using a software application loaded into the volatile memory. The instructions, when executed by the CPU, may cause the electronic device to, based on the event, identify a command including a size of the trained model to be loaded into the volatile memory, from the software application. The instructions, when executed by the CPU, may cause the electronic device to, based on the size of the trained model indicated by the command being larger than a size of an available space in the volatile memory, identify an execution state of the CPU. The instructions, when executed by the CPU, may cause the electronic device to, by executing a number of threads wherein the number is determined according to the execution state of the CPU, obtain an additional available space within the volatile memory for loading the trained model.

For example, the instructions, when executed by the CPU, may cause the electronic device to identify the execution state using PSI associated with the CPU.

For example, the instructions, when executed by the CPU, may cause the electronic device to, based on identifying that a numeric value indicating workload of the CPU included in the PSI is included in a preset range indicating overload, determine a number of the threads to be executed to obtain the additional available space, as a preset number. For example, the instructions, when executed by the CPU, may cause the electronic device to, based on identifying that the numeric value is different from the preset range, determine the number of the threads as another number greater than the preset number.

For example, the thread may be configured to compress a portion of the volatile memory allocated to a process executed by the CPU, to obtain the additional available space.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, an equivalent result may be achieved.

## Claims

**1.** An electronic device comprising:

non-volatile memory comprising one or more storage media storing instructions;
volatile memory; and
at least one processor comprising processing circuitry,
wherein the instructions, when executed by the at least one processor individually or collectively, cause the electronic device to:

identify an event to load a trained model into the volatile memory while executing a software application;
based on the event, identify a command indicating a size of the trained model to be loaded into the volatile memory, wherein the command is generated by the software application;
based on the size of the trained model indicated by the command being larger than a size of an available space within the volatile memory, identify an execution state of the processor;
based on an execution state of the processor being a first execution state, obtain additional available space within the volatile memory for loading the trained model using a single thread; and
based on an execution state of the processor being a second execution state, obtain the additional available space using multi-threading.

**2.** The electronic device of claim 1, wherein the instructions, when executed by the at least one processor individually or collectively, cause the electronic device to:

based on the command, identify a plurality of processes having a preset state;
based on identifying the plurality of processes, identify distinct portions of the volatile memory respectively allocated to the plurality of processes;
based on identifying each of the portions:

calculate a size increment of the available space obtainable by compressing each portion; and
based on the calculated size increment, determine whether to perform compression with respect to a process corresponding to the calculated size increment.

3. The electronic device of claim 2, wherein the instructions, when executed by the at least one processor individually or collectively, cause the electronic device to:
obtain the additional available space by:

identifying one or more processes for which to perform compression, among the plurality of processes; and
execute at least one thread corresponding to the one or more processes.

4. The electronic device of claim 2 or 3, wherein the instructions, when executed by the at least one processor individually or collectively, cause the electronic device to:
search the plurality of processes having the preset state indicating uninterruptible sleep.

5. The electronic device of claim 2, 3 or 4, wherein the instructions, when executed by the at least one processor individually or collectively, cause the electronic device to:
obtain the additional available space by moving compressed data generated in the volatile memory, from the volatile memory to a virtual memory space formed in the non-volatile memory.

6. The electronic device of any one of claims 2 to 5, wherein the instructions, when executed by the at least one processor individually or collectively, cause the electronic device to:
obtain the additional available space by executing a kill command with respect to another process to change a portion of the volatile memory associated with the other process having a state different from the preset state, to become available space.

7. The electronic device of any one of claims 1 to 6, wherein the instructions, when executed by the at least one processor, which is a central processing unit (CPU), cause the electronic device to:

store the trained model within the available space in the volatile memory including the additional available space; and
control a neural processing unit (NPU) to execute the trained model stored in the available space.

8. The electronic device of any one of claims 1 to 7, wherein the instructions, when executed by the at least one processor individually or collectively, cause the electronic device to:
identify the execution state using pressure stall information (PSI) of the processor.

9. A computer program comprising instructions, which, when executed by an electronic device including volatile memory, cause the electronic device to:

identify an event to load a trained model into the volatile memory using a software application to be loaded into the volatile memory;
based on the event, identify a command indicating a size of the trained model to be loaded into the volatile memory, wherein the command is generated by the software application;
based on the size of the trained model indicated by the command being larger than a size of an available space within the volatile memory, identify an execution state of the processor;
based on an execution state of the processor being a first execution state, obtain an additional available space within the volatile memory for loading the trained model according to a single thread; and
based on an execution state of the processor being a second execution state, obtain the additional available space according to a multi-thread.

10. The computer program of claim 9, wherein the instructions, when executed by the electronic device, cause the electronic device to:

based on the command, identify a plurality of processes having a preset state;
based on identifying the plurality of processes, identify distinct portions of the volatile memory respectively allocated to the plurality of processes;
based on identifying each of the portions:

calculate a size increment of the available space obtainable by compressing each portion; and
based on the calculated size increment, determine whether to perform compression with respect to a process corresponding to the calculated size increment.

**11.** The computer program of claim 10, wherein the instructions, when executed by the electronic device, cause the electronic device to:
obtain the additional available space by:

identifying one or more processes for which to perform compression, among the plurality of processes; and
by executing at least one thread corresponding to the one or more processes, obtain the additional available space.

**12.** The computer program of claim 10 or 11, wherein the instructions, when executed by the electronic device, cause the electronic device to:
search the plurality of processes having the preset state indicating uninterruptible sleep.

**13.** The computer program of claim 10, 11 or 12, wherein the instructions, when executed by the electronic device further including non-volatile memory, cause the electronic device to:
obtain the additional available space, by moving compressed data generated in the volatile memory by performing the compression, from the volatile memory to a virtual memory space formed in the non-volatile memory.

**14.** The computer program of any one of claims 10 to 13, wherein the instructions, when executed by the electronic device, cause the electronic device to:
obtain the additional available space, by executing a kill command with respect to another process to change a portion of the volatile memory associated with the other process having a state different from the preset state, to become available space.

**15.** The computer program of any one of claims 9 to 14, wherein the instructions, when executed by the electronic device, cause the electronic device to:

store the trained model within the available space in the volatile memory including the additional available space; and
control a neural processing unit (NPU) to execute the trained model stored in the available space.

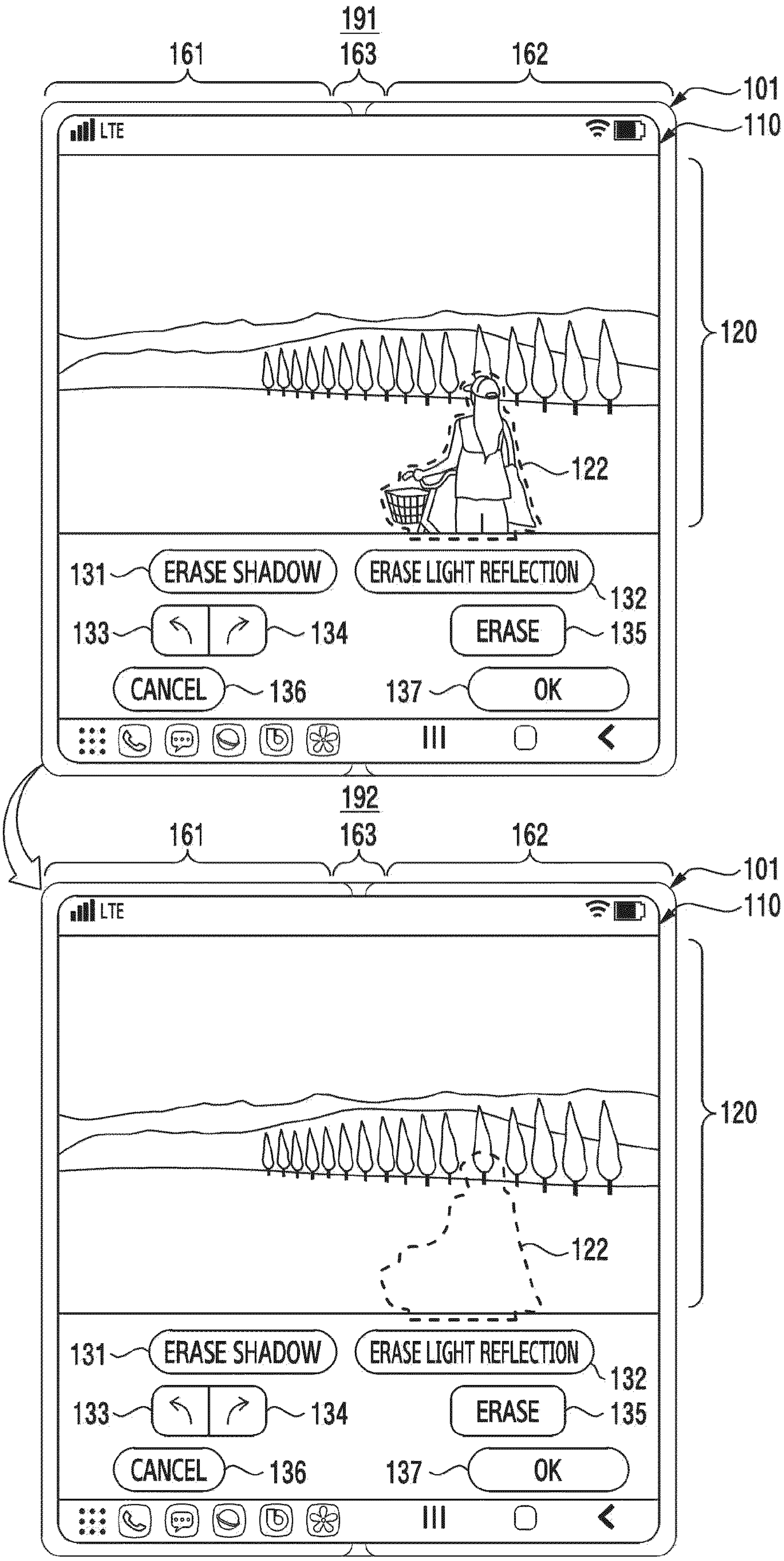
191
161
163
162
101
110
LTE
120
122
131
ERASE SHADOW
ERASE LIGHT REFLECTION
132
133
134
ERASE
135
CANCEL
136
137
OK
192
161
163
162
101
110
LTE
120
122
131
ERASE SHADOW
ERASE LIGHT REFLECTION
132
133
134
ERASE
135
CANCEL
136
137
OK

FIG. 1

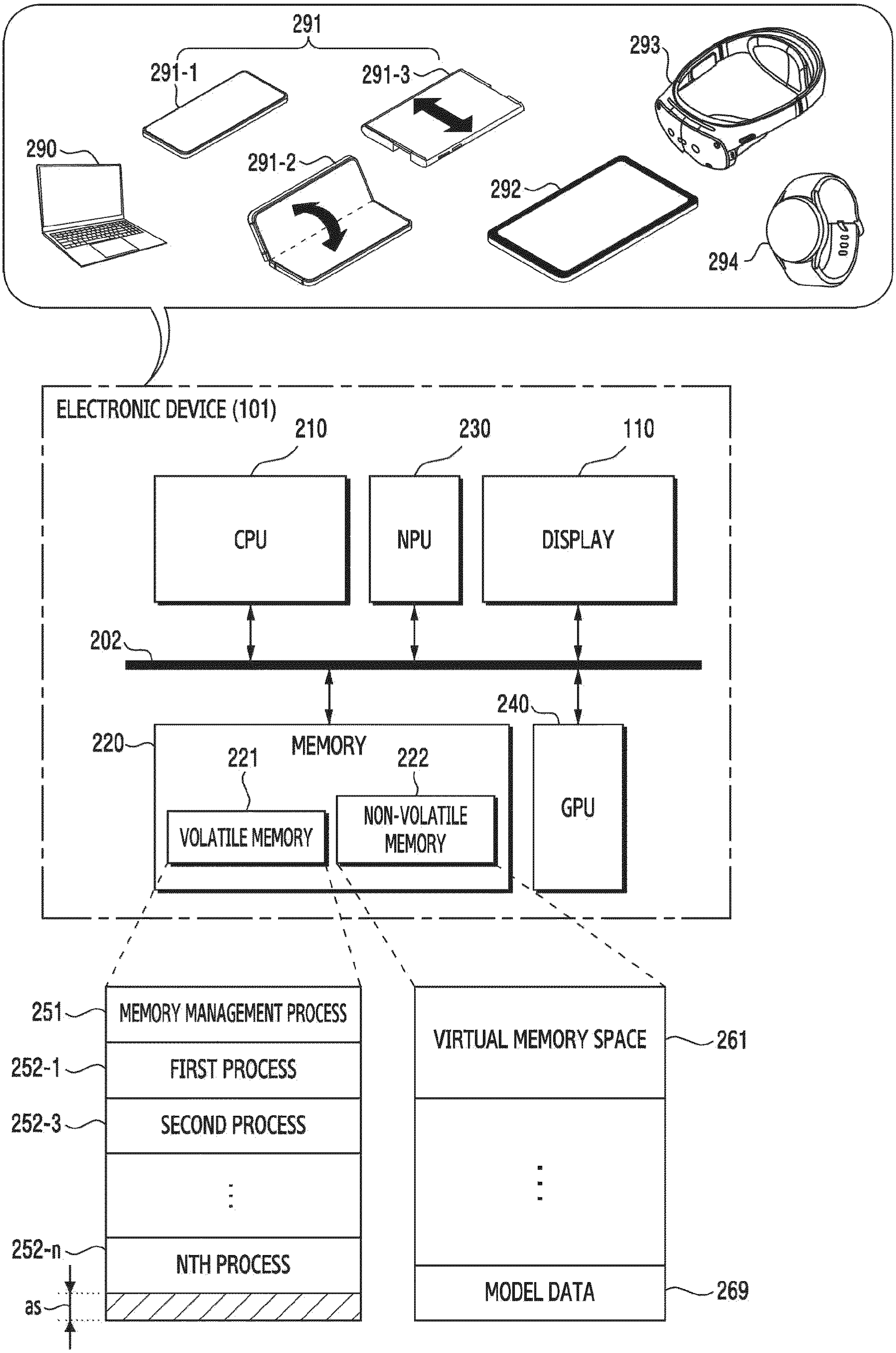
291
291-1
291-3
293
290
291-2
292
294
ELECTRONIC DEVICE (101)
210
230
110
CPU
NPU
DISPLAY
202
240
220
MEMORY
221
222
VOLATILE MEMORY
NON-VOLATILE MEMORY
GPU
251
MEMORY MANAGEMENT PROCESS
252-1
FIRST PROCESS
252-3
SECOND PROCESS
252-n
NTH PROCESS
as
VIRTUAL MEMORY SPACE
261
MODEL DATA
269

FIG. 2

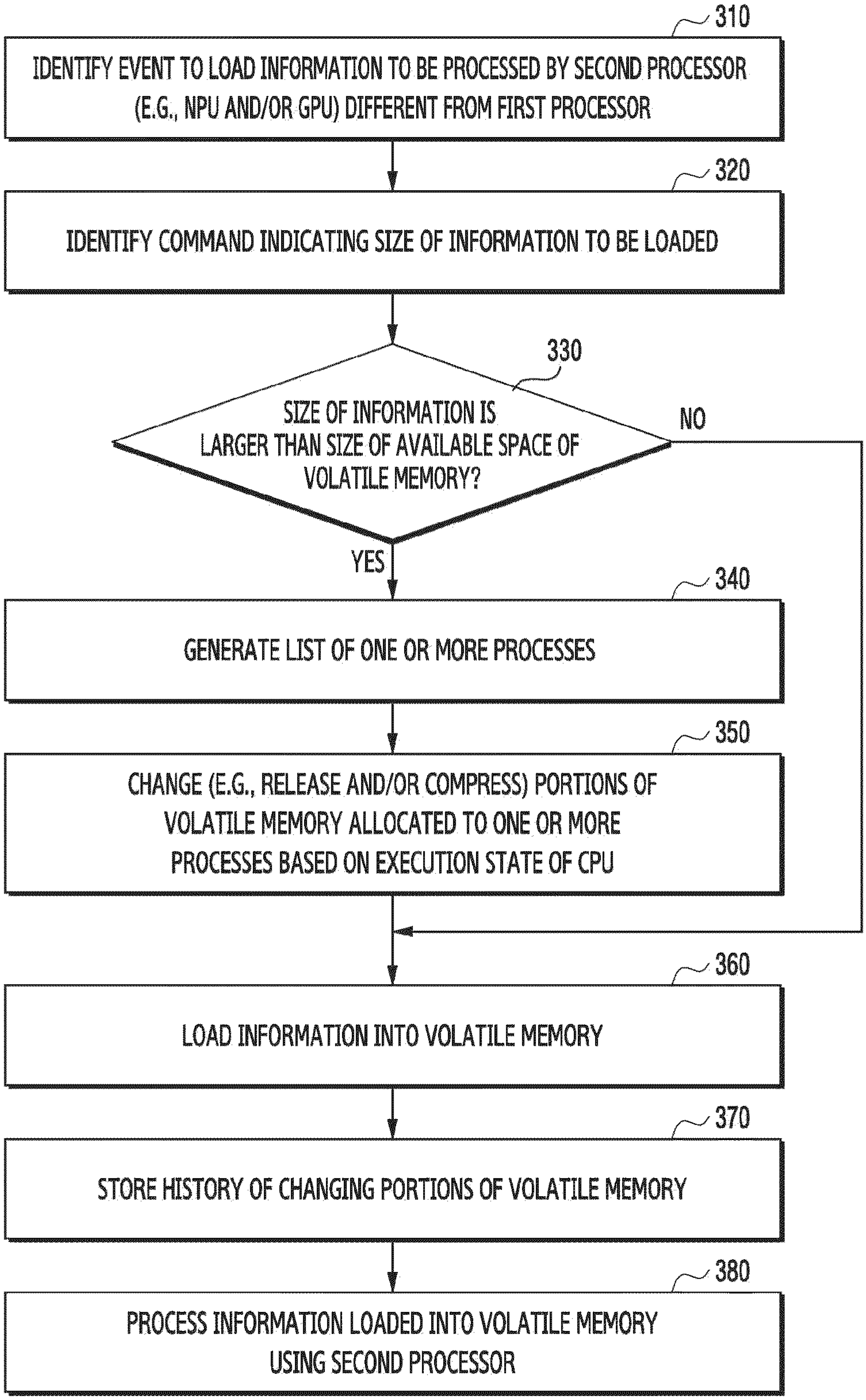
310
IDENTIFY EVENT TO LOAD INFORMATION TO BE PROCESSED BY SECOND PROCESSOR (E.G., NPU AND/OR GPU) DIFFERENT FROM FIRST PROCESSOR
320
IDENTIFY COMMAND INDICATING SIZE OF INFORMATION TO BE LOADED
330
SIZE OF INFORMATION IS LARGER THAN SIZE OF AVAILABLE SPACE OF VOLATILE MEMORY?
NO
YES
340
GENERATE LIST OF ONE OR MORE PROCESSES
350
CHANGE (E.G., RELEASE AND/OR COMPRESS) PORTIONS OF VOLATILE MEMORY ALLOCATED TO ONE OR MORE PROCESSES BASED ON EXECUTION STATE OF CPU
360
LOAD INFORMATION INTO VOLATILE MEMORY
370
STORE HISTORY OF CHANGING PORTIONS OF VOLATILE MEMORY
380
PROCESS INFORMATION LOADED INTO VOLATILE MEMORY USING SECOND PROCESSOR

FIG. 3

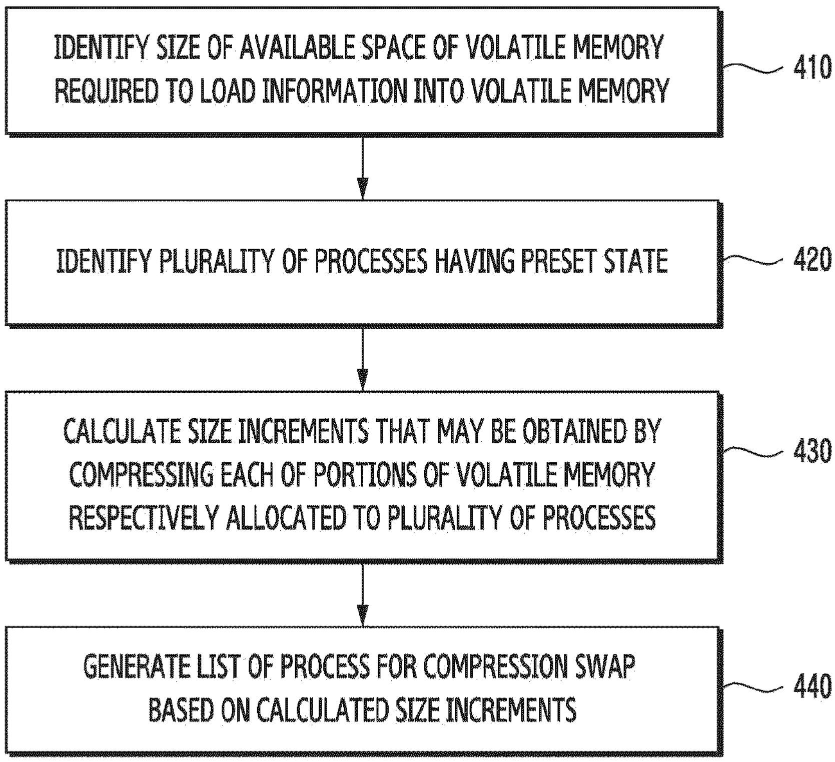
IDENTIFY SIZE OF AVAILABLE SPACE OF VOLATILE MEMORY REQUIRED TO LOAD INFORMATION INTO VOLATILE MEMORY
410
IDENTIFY PLURALITY OF PROCESSES HAVING PRESET STATE
420
CALCULATE SIZE INCREMENTS THAT MAY BE OBTAINED BY COMPRESSING EACH OF PORTIONS OF VOLATILE MEMORY RESPECTIVELY ALLOCATED TO PLURALITY OF PROCESSES
430
GENERATE LIST OF PROCESS FOR COMPRESSION SWAP BASED ON CALCULATED SIZE INCREMENTS
440

FIG. 4

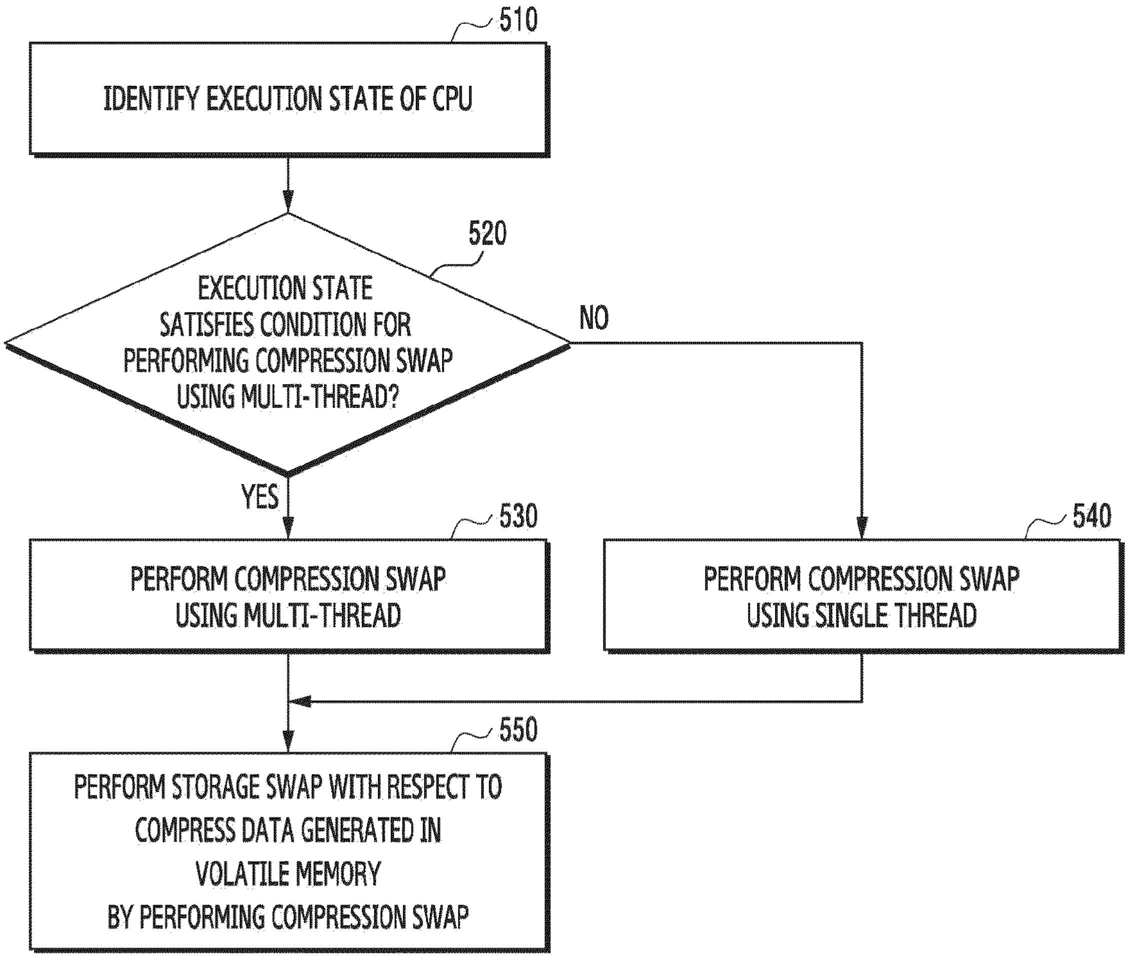
510
IDENTIFY EXECUTION STATE OF CPU
520
EXECUTION STATE SATISFIES CONDITION FOR PERFORMING COMPRESSION SWAP USING MULTI-THREAD?
NO
YES
530
PERFORM COMPRESSION SWAP USING MULTI-THREAD
540
PERFORM COMPRESSION SWAP USING SINGLE THREAD
550
PERFORM STORAGE SWAP WITH RESPECT TO COMPRESS DATA GENERATED IN VOLATILE MEMORY BY PERFORMING COMPRESSION SWAP

FIG. 5

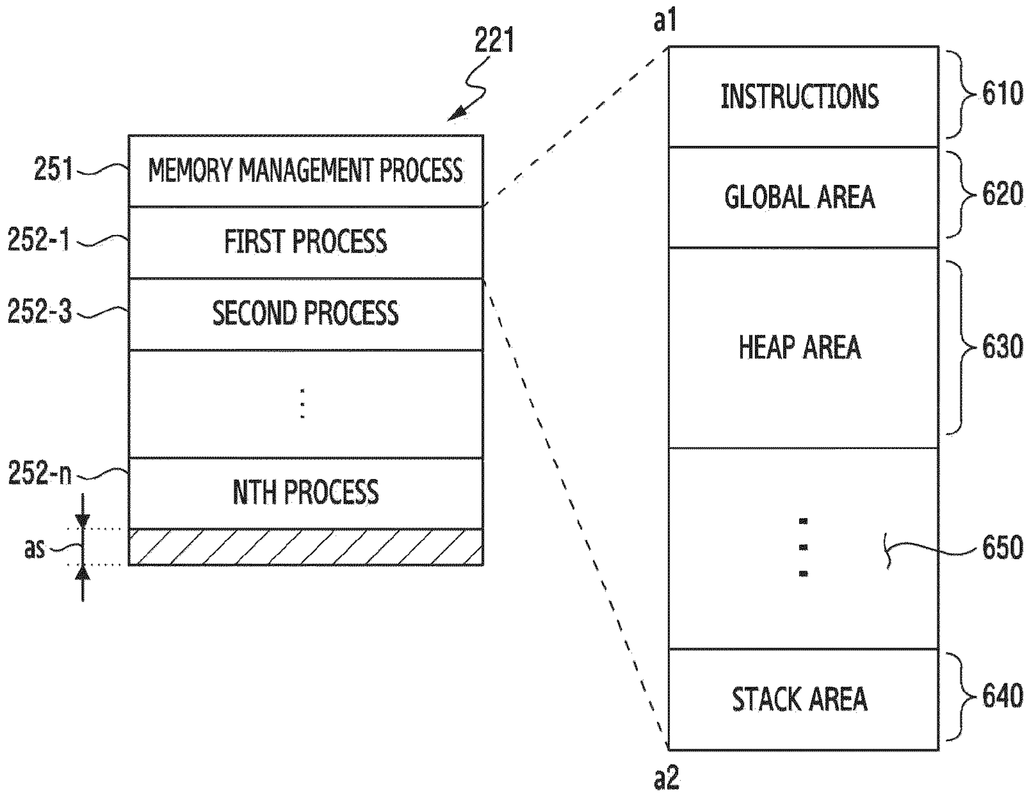
221
251
MEMORY MANAGEMENT PROCESS
252-1
FIRST PROCESS
252-3
SECOND PROCESS
252-n
NTH PROCESS
as
a1
INSTRUCTIONS
610
GLOBAL AREA
620
HEAP AREA
630
650
STACK AREA
640
a2

FIG. 6

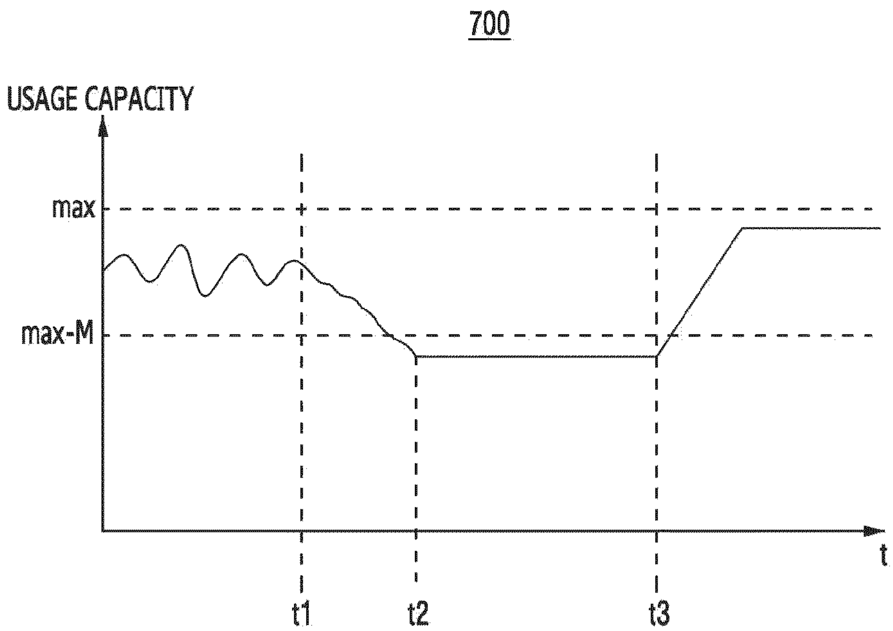


FIG. 7

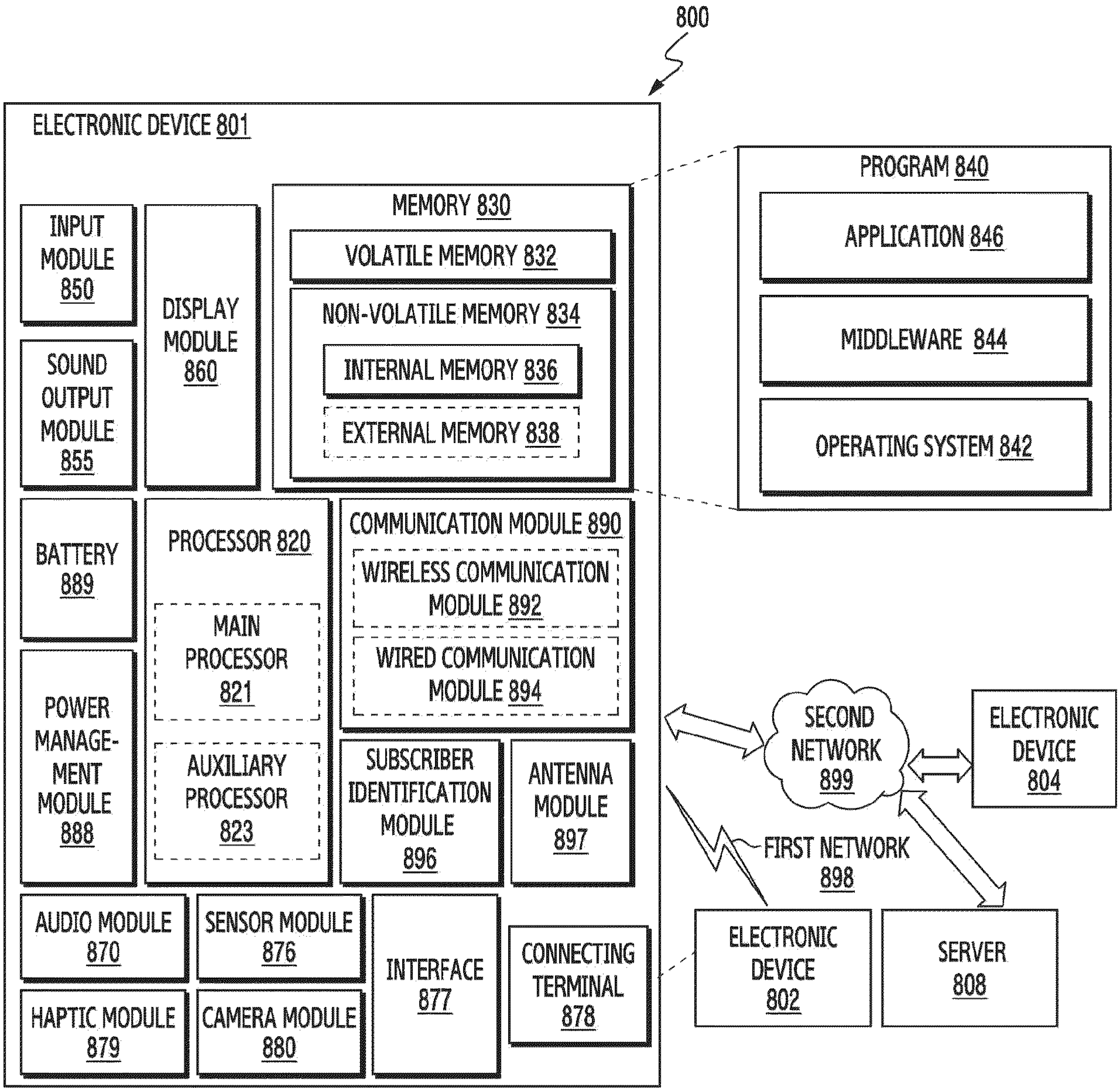
800
ELECTRONIC DEVICE 801
INPUT MODULE 850
SOUND OUTPUT MODULE 855
DISPLAY MODULE 860
MEMORY 830
VOLATILE MEMORY 832
NON-VOLATILE MEMORY 834
INTERNAL MEMORY 836
EXTERNAL MEMORY 838
PROGRAM 840
APPLICATION 846
MIDDLEWARE 844
OPERATING SYSTEM 842
BATTERY 889
POWER MANAGE-MENT MODULE 888
PROCESSOR 820
MAIN PROCESSOR 821
AUXILIARY PROCESSOR 823
COMMUNICATION MODULE 890
WIRELESS COMMUNICATION MODULE 892
WIRED COMMUNICATION MODULE 894
SUBSCRIBER IDENTIFICATION MODULE 896
ANTENNA MODULE 897
SECOND NETWORK 899
ELECTRONIC DEVICE 804
FIRST NETWORK 898
AUDIO MODULE 870
SENSOR MODULE 876
INTERFACE 877
CONNECTING TERMINAL 878
HAPTIC MODULE 879
CAMERA MODULE 880
ELECTRONIC DEVICE 802
SERVER 808

FIG. 8

## INTERNATIONAL SEARCH REPORT

International application No.
**PCT/KR2025/004249**

**A. CLASSIFICATION OF SUBJECT MATTER**

**G06F 3/06**(2006.01)i; **G06F 12/02**(2006.01)i

According to International Patent Classification (IPC) or to both national classification and IPC

**B. FIELDS SEARCHED**

Minimum documentation searched (classification system followed by classification symbols)

G06F 3/06(2006.01); G06F 12/02(2006.01); G06F 12/123(2016.01); G06F 9/50(2006.01); G06N 3/063(2006.01); G06N 3/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 트레이닝 모델(training model), 로드(load), 메모리 가용 공간(memory available space), 사이즈(size), 부족(lack), 회수(reclaim), CPU 상태(CPU state), 스레드(thread)

**C. DOCUMENTS CONSIDERED TO BE RELEVANT**

| Category* | Citation of document, with indication, where appropriate, of the relevant passages | Relevant to claim No. |
|---|---|---|
| A | KR 10-2022-0033912 A (SAMSUNG ELECTRONICS CO., LTD.) 17 March 2022 (2022-03-17)<br>paragraphs [0008]-[0016], [0070]; and figure 3 | 1-15 |
| A | KR 10-2023-0167943 A (INDUSTRY-ACADEMIC COOPERATION FOUNDATION CHANGWON NATIONAL UNIVERSITY) 12 December 2023 (2023-12-12)<br>paragraphs [0041], [0067] | 1-15 |
| A | KR 10-2023-0081533 A (SAMSUNG ELECTRONICS CO., LTD.) 07 June 2023 (2023-06-07)<br>paragraphs [0039]-[0043], [0077]-[0079] | 1-15 |
| A | KR 10-2023-0152186 A (DEEPX CO., LTD.) 02 November 2023 (2023-11-02)<br>paragraphs [0012], [0131] | 1-15 |
| A | US 2024-0054079 A1 (HUAWEI DEVICE CO., LTD.) 15 February 2024 (2024-02-15)<br>paragraphs [0049], [0077] | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 July 2025** | **21 July 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2025/004249**

| Patent document cited in search report | Publication date (day/month/year) | Patent family member(s) | Publication date (day/month/year) |
|---|---|---|---|
| KR 10-2022-0033912 A | 17 March 2022 | US 2023-0214262 A1 | 06 July 2023 |
| | | WO 2022-055261 A1 | 17 March 2022 |
| KR 10-2023-0167943 A | 12 December 2023 | KR 10-2777611 B1 | 06 March 2025 |
| KR 10-2023-0081533 A | 07 June 2023 | US 12265709 B2 | 01 April 2025 |
| | | US 2023-0168810 A1 | 01 June 2023 |
| | | WO 2023-101152 A1 | 08 June 2023 |
| KR 10-2023-0152186 A | 02 November 2023 | CN 114444671 A | 06 May 2022 |
| | | CN 114444672 A | 06 May 2022 |
| | | CN 114444673 A | 06 May 2022 |
| | | CN 114761972 A | 15 July 2022 |
| | | CN 114861898 A | 05 August 2022 |
| | | KR 10-2022-0059407 A | 10 May 2022 |
| | | KR 10-2022-0059408 A | 10 May 2022 |
| | | KR 10-2022-0059409 A | 10 May 2022 |
| | | KR 10-2022-0059410 A | 10 May 2022 |
| | | KR 10-2022-0059934 A | 10 May 2022 |
| | | KR 10-2023-0152645 A | 03 November 2023 |
| | | KR 10-2024-0059638 A | 07 May 2024 |
| | | KR 10-2596405 B1 | 31 October 2023 |
| | | KR 10-2661710 B1 | 29 April 2024 |
| | | KR 10-2706330 B1 | 12 September 2024 |
| | | KR 10-2728101 B1 | 08 November 2024 |
| | | US 11922051 B2 | 05 March 2024 |
| | | US 11972137 B2 | 30 April 2024 |
| | | US 12169642 B2 | 17 December 2024 |
| | | US 12235778 B2 | 25 February 2025 |
| | | US 2022-0137866 A1 | 05 May 2022 |
| | | US 2022-0137868 A1 | 05 May 2022 |
| | | US 2022-0137869 A1 | 05 May 2022 |
| | | US 2022-0138586 A1 | 05 May 2022 |
| | | US 2023-0297519 A1 | 21 September 2023 |
| | | US 2024-0220153 A1 | 04 July 2024 |
| | | US 2024-0231681 A1 | 11 July 2024 |
| | | US 2025-0036306 A1 | 30 January 2025 |
| | | US 2025-0165409 A1 | 22 May 2025 |
| | | WO 2022-092416 A1 | 05 May 2022 |
| | | WO 2022-092988 A1 | 05 May 2022 |
| US 2024-0054079 A1 | 15 February 2024 | CN 114443268 A | 06 May 2022 |
| | | CN 114443277 A | 06 May 2022 |
| | | CN 114449585 A | 06 May 2022 |
| | | CN 114579068 A | 03 June 2022 |
| | | CN 114579068 B | 25 June 2024 |
| | | EP 4213576 A1 | 19 July 2023 |
| | | EP 4220400 A1 | 02 August 2023 |
| | | EP 4220400 A4 | 17 January 2024 |
| | | EP 4231133 A1 | 23 August 2023 |
| | | JP 2023-547051 A | 09 November 2023 |
| | | JP 7547701 B2 | 10 September 2024 |
| | | US 11977810 B2 | 07 May 2024 |
| | | US 12242389 B2 | 04 March 2025 |

Form PCT/ISA/210 (patent family annex) (July 2022)

**INTERNATIONAL SEARCH REPORT**
**Information on patent family members**

International application No.
**PCT/KR2025/004249**

| Patent document cited in search report | Publication date (day/month/year) | Patent family member(s) | Publication date (day/month/year) |
|---|---|---|---|
| | | US 2023-0319147 A1 | 05 October 2023 |
| | | US 2024-0053946 A1 | 15 February 2024 |
| | | WO 2022-089452 A1 | 05 May 2022 |
| | | WO 2022-089503 A1 | 05 May 2022 |
| | | WO 2022-110386 A1 | 02 June 2022 |
| | | WO 2022-110458 A1 | 02 June 2022 |
| | | WO 2022-111599 A1 | 02 June 2022 |
| | | WO 2022-111711 A1 | 02 June 2022 |
| | | WO 2022-111727 A1 | 02 June 2022 |

Form PCT/ISA/210 (patent family annex) (July 2022)